# EUROPÄISCHE PATENTSCHRIFT

(11) **EP 3 195 977 B1**
(45) Veröffentlichungstag und Bekanntmachung des Hinweises auf die Patenterteilung: **12.08.2020**
(21) Anmeldenummer: 17152411.9
(22) Anmeldetag: 20.01.2017
(51) Int. Cl.: B23Q 39/02, B23Q 7/04, B23Q 3/157

(54) **WERKZEUGMASCHINE, INSBESONDERE MEHRFACHSPINDEL-FRÄSMASCHINE**
MACHINE TOOL, IN PARTICULAR MULTIPLE SPINDLE MILLING MACHINE
MACHINE-OUTIL, EN PARTICULIER FRAISEUSE MULTIBROCHE

(30) Priorität: 25.01.2016 DE 102016201018
(43) Veröffentlichungstag der Anmeldung: 26.07.2017
(73) Patentinhaber: DECKEL MAHO Pfronten GmbH, 87459 Pfronten (DE)
(72) Erfinder: GEIßLER, Alfred, 87459 Pfronten (DE); JUNG, Robert, 87459 Pfronten (DE); RINDERLE, Martin, 87474 Buchenberg (DE)
(74) Vertreter: MERH-IP Matias Erny Reichl Hoffmann Patentanwälte PartG mbB

(56) Entgegenhaltungen:
- EP-A1- 2 233 247
- WO-A1-02/00390
- DE-A1- 10 235 518
- DE-A1-102013 013 050
- JP-A- S6 389 235
- US-A1- 2004 110 614

## Beschreibung

### Beschreibung

Die vorliegende Erfindung betrifft eine Werkzeugmaschine, insbesondere eine numerisch steuerbare Werkzeugmaschine bzw. Fräsmaschine. Insbesondere betrifft die vorliegende Erfindung eine Mehrfachspindel-Fräsmaschine, Mehrfachspindel-Bohrmaschine bzw. Mehrfachspindel-Fräs-/Bohrmaschine oder eine Mehrfachspindel-Universal-fräsmaschine bzw. ein Mehrfachspindel-Bearbeitungszentrum, insbesondere mit zwei oder mehr werkzeugtragenden Arbeitsspindeln.

### Hintergrund der Erfindung

Im Stand der Technik sind Werkzeugmaschinen mit werkzeugtragender Arbeitsspindel bekannt. Diese sind heutzutage zumeist mit numerischen Steuerungen versehen und z.B. als Fräsmaschinen, Fräszentren, Universal-Fräsmaschinen oder CNC-Bearbeitungszentren mit vier, fünf oder manchmal auch mehr als fünf numerisch ansteuerbaren Linear- und/oder Dreh- bzw. Schwenkachsen bekannt, siehe hierzu z.B. die Werkzeugmaschine gemäß DE 10 2010 064 271 A1. Die DE 10 2013 013 050 A1 betrifft eine Werkzeugmaschine gemäß dem Oberbegriff des Anspruchs 1.

Abzugrenzen sind derartige Werkzeugmaschinen mit werkzeugtragender Arbeitsspindel von Werkzeugmaschinen mit werkstücktragender Arbeitsspindel, wie z.B. Drehmaschinen, Drehzentren, Doppelspindel-Drehmaschinen, Mehrfachspindel-Dreh-maschinen oder Mehrfachspindel-Dreh-automaten.

Es ist eine grundsätzliche Aufgabe auf dem Gebiet des Werkzeugmaschinenbaus als auch insbesondere eine zugrunde liegende Aufgabe der vorliegenden Erfindung, eine Werkzeugmaschine mit werkzeugtragender Arbeitsspindel, insbesondere eine Werkzeugmaschine für fräsende und/oder bohrende Bearbeitung eines Werkstücks, bereitzustellen, die gleichzeitig präzise und zuverlässig mit möglichst kleinen Standzeiten arbeitet, als auch kostengünstig, kompakt und effizient bereitgestellt werden kann.

### Zusammenfassung der Erfindung

Gemäß der vorliegenden Erfindung wird eine Werkzeugmaschine gemäß Anspruch 1 vorgeschlagen. Die abhängigen Ansprüche betreffen bevorzugte Ausführungsbeispiele der Erfindung.

Gemäß einem Aspekt der vorliegenden Erfindung wird eine Werkzeugmaschine vorgeschlagen, mit: einem einen Bearbeitungsraum ausbildenden Maschinengestell, einer Werkstückspanneinrichtung zum Einspannen eines Werkstücks, einer an dem Maschinengestell angeordneten Achsschlitten-Baugruppe, die dazu eingerichtet ist, das an der Werkstückspanneinrichtung eingespannte Werkstück mittels zumindest zwei steuerbarer Linearachsen linear zu verfahren, und/oder einer an dem Maschinengestell angeordneten Spindelträger-Baugruppe mit zumindest zwei werkzeugtragenden Arbeitsspindeln.

Hierbei ist eine erste Arbeitsspindel der zumindest zwei werkzeugtragenden Arbeitsspindeln mittels einer dritten steuerbaren Linearachse zwischen einer Bearbeitungsposition im Bearbeitungsraum und einer ersten Werkzeugwechselposition der ersten Arbeitsspindel linear verfahrbar.

Weiterhin ist eine zweite Arbeitsspindel der zumindest zwei werkzeugtragenden Arbeitsspindeln mittels einer vierten steuerbaren Linearachse zwischen der (selben) Bearbeitungsposition im Bearbeitungsraum und einer zweiten Werkzeugwechselposition der zweiten Arbeitsspindel linear verfahrbar.

Der Erfindung liegt hierbei der Gedanke zugrunde, dass zwei werkzeugtragende - Arbeitsspindeln vorgesehen sein können, die hintereinander, zeitgleich und/oder unabhängig voneinander das gleiche Werkstück bearbeiten können, wobei insbesondere einerseits jeweils ein Werkzeugwechsel an einer der Arbeitsspindeln ermöglicht ist, wenn diese an die jeweilige Werkzeugwechselposition positioniert wird, während zeitsparend mittels eines an der anderen Arbeitsspindel aufgenommenen Werkzeugs das an der Werkstückspanneinrichtung gespannte Werkstück mittels der anderen Arbeitsspindel bearbeitet werden kann. Dies reduziert vorteilhaft etwaige Stillstandzeiten aufgrund von Werkzeugwechseln.

Zudem kann die Werkzeugmaschine äußerst kompakt und mit besonders kleiner Standfläche des Maschinengestells (mit etwaigem Werkzeugmagazin) ausgebildet werden, weil die Verfahrbarkeit zu der jeweiligen Werkzeugwechselposition mittels einer jeweiligen Linearachse ermöglicht wird, die bei Bearbeitung des Werkstücks zudem einen weiteren translatorischen Freiheitsgrad der Relativbewegung zwischen Werkzeug und Werkstück ermöglicht. Die anderen beiden translatorischen Freiheitsgrade der Relativbewegung zwischen Werkzeug und Werkstück können dabei in äußerst kompakter Bauweise durch die zwei (oder mehr) Linearachsen der Achsschlitten-Baugruppe bereitgestellt werden.

Die Richtungen der dritten und vierten Linearachsen sing schräg oder senkrecht zueinander ausgerichtet, insbesondere mit einem Winkel kleiner oder gleich 90 Grad oder kleiner oder gleich 45 Grad bzw. kleiner oder gleich 30 Grad, und die erste Werkzeugwechselposition ist im Wesentlichen über der zweiten Werkzeugwechselposition angeordnet sein.

Dies hat den Vorteil, dass für Werkzeugwechsel an beiden Arbeitsspindeln der gleiche Werkzeugwechselmechanismus bzw. das gleiche Werkzeugmagazin verwendet werden kann, ggf. ohne weitere Werkzeugwechsel-Manipulatoren vorsehen zu müssen. Dies ermöglicht vorteilhaft eine noch kompaktere Bauweise, so dass ein Raumbedarf der Werkzeugmaschine in Werkhallen vorteilhaft reduziert werden kann.

In bevorzugten Ausführungsbeispielen kann die Werkzeugmaschine weiterhin ein Werkzeugmagazin umfassen, das einen an dem Maschinengestell angeordneten Werkzeugmagazinträger aufweisen kann, der vorzugsweise dazu eingerichtet sein kann, eine Mehrzahl von Werkzeugen vorzuhalten, und der vorzugsweise mittels einer fünften Linearachse senkrecht zu den Richtungen der dritten und vierten Linearachsen und insbesondere parallel zu den Spindelachsen der zwei werkzeugtragenden Arbeitsspindeln verfahrbar ist.

In bevorzugten Ausführungsbeispielen sind die Werkzeugwechselpositionen der zwei werkzeugtragenden Arbeitsspindeln in einer ersten Stellung des Werkzeugmagazinträgers an jeweiligen Wechselabschnitten des Werkzeugmagazinträgers angeordnet, und die zwei werkzeugtragenden Arbeitsspindeln sind vorzugsweise in der ersten Stellung des Werkzeugmagazinträgers durch jeweiliges Verfahren zu der jeweiligen Werkzeugwechselposition dazu eingerichtet, für einen Werkzeugwechsel Werkzeuge an einen Werkzeughalter des Werkzeugmagazins an dem jeweiligen Wechselabschnitt des Werkzeugmagazinträgers direkt einzusetzen.

Dies hat den Vorteil, dass für Werkzeugwechsel an beiden Arbeitsspindeln der gleiche Werkzeugwechselmechanismus bzw. das gleiche Werkzeugmagazin verwendet werden kann, und insbesondere ohne weitere (platzraubende und im Werkzeugwechsel zeitraubende) Werkzeugwechsel-Manipulatoren vorsehen zu müssen. Dies ermöglicht vorteilhaft eine noch kompaktere Bauweise, so dass ein Raumbedarf der Werkzeugmaschine in Werkhallen vorteilhaft reduziert werden kann, und eine vorteilhafte Reduktion der Werkzeugwechselzeiten.

In bevorzugten Ausführungsbeispielen ist der Werkzeugmagazinträger dazu eingerichtet, zur Entnahme eines an einer der Werkzeugspindeln aufgenommenen Werkzeugs an der jeweiligen Werkzeugwechselposition mittels der fünften Linearachse aus der ersten Stellung in eine zweite Stellung zu verfahren. Somit kann der Werkzeughub (von der Spindel weg bzw. zu der Spindel hin) beim Werkzeugwechsel durch Verfahren des Werkzeugmagazins bzw. des Werkzeugmagazinträgers platz- und zeitsparend erfolgen, da insbesondere keinen weiteren Werkzeugwechselvorrichtungen, Wechselgreifer oder anderweitige Manipulatoren benötigt werden.

In bevorzugten Ausführungsbeispielen ist der Werkzeugmagazinträger dazu eingerichtet, zum Einsetzen eines Werkzeugs an einer der Werkzeugspindeln an der jeweiligen Werkzeugwechselposition mittels der fünften Linearachse aus der zweiten Stellung in die erste Stellung zu verfahren.

In bevorzugten Ausführungsbeispielen weist das Werkzeugmagazin weiterhin eine Werkzeugmagazinkette auf, die vorzugsweise umfänglich verfahrbar an dem Werkzeugmagazinträger angeordnet ist.

In bevorzugten Ausführungsbeispielen ist eine jeweilige an der Bearbeitungsposition positionierte Arbeitsspindel mittels eines aufgenommenen Werkzeugs dazu eingerichtet, das an der Werkstückspanneinrichtung eingespannte Werkstück zu bearbeiten, während die jeweils andere Arbeitsspindel für einen Werkzeugwechsel an der jeweiligen Werkzeugwechselposition positioniert ist. Dies reduziert äußerst vorteilhaft etwaige Stillstandzeiten aufgrund von Werkzeugwechseln.

In bevorzugten Ausführungsbeispielen ist eine jeweilige an der entsprechenden Werkzeugwechselposition positionierte Arbeitsspindel (z.B. nach einem erfolgten Werkzeugwechsel) dazu eingerichtet, auf Bearbeitungsspindeldrehzahlen hochzufahren, während die jeweils andere Arbeitsspindel mittels eines aufgenommenen Werkzeugs das an der Werkstückspanneinrichtung eingespannte Werkstück bearbeitet. Dies reduziert äußerst vorteilhaft etwaige Stillstandzeiten aufgrund von Werkzeugwechseln und während dem Hochfahren der Spindeln auf Bearbeitungsdrehzahlen nach dem Werkzeugwechsel.

In bevorzugten Ausführungsbeispielen weist die Werkzeugmaschine eine automatisch öffen- und schließbare Schutzklappenvorrichtung auf, die vorzugsweise in geschlossenem Zustand einen die Werkstückspanneinrichtung aufweisenden Bearbeitungsraum der Werkzeugmaschine von den Werkzeugwechselpositionen der Werkzeugmaschine abtrennt und in geöffnetem Zustand ein Verfahren der Arbeitsspindeln zwischen dem Bearbeitungsraum und den jeweiligen Werkzeugwechselpositionen ermöglicht.

In bevorzugten Ausführungsbeispielen ist die erste Arbeitsspindel dazu eingerichtet, Werkzeugschnittstellen einer ersten Größe aufzunehmen und die zweite Arbeitsspindel ist vorzugsweise dazu eingerichtet, Werkzeugschnittstellen einer von der ersten Größe verschiedenen zweiten Größe aufzunehmen. Dies hat den Vorteil, dass das Werkstück direkt hintereinander (d.h. insbesondere ohne etwaige Stillstandzeiten aufgrund von Spindelumbauten oder Spindelwechseln bzw. Einsetzen von Adaptern an den Arbeitsspindeln) mit Werkzeugen unterschiedlicher Größen bzw. unterschiedlich großen Werkzeugschnittstellen an der gleichen Werkzeugmaschine bearbeitet werden können.

In weiteren Ausführungsbeispielen können die erste Arbeitsspindel und die zweite Arbeitsspindel jeweils dazu eingerichtet sein, Werkzeugschnittstellen gleicher Größe aufzunehmen.

In bevorzugten Ausführungsbeispielen kann die erste Arbeitsspindel dazu eingerichtet sein, Werkzeugschnittstellen eines ersten Werkzeugschnittstellentyps, insbesondere des Hohlschaftkegeltyps, des Morsekegeltyps oder des Steilkegeltyps, aufzunehmen und die zweite Arbeitsspindel kann dazu eingerichtet sein, Werkzeugschnittstellen eines vom ersten Werkzeugschnittstellentyp verschiedenen zweiten Werkzeugschnittstellentyps aufzunehmen. Dies hat den Vorteil, dass das Werkstück direkt hintereinander (d.h. insbesondere ohne etwaige Stillstandzeiten aufgrund von Spindelumbauten oder Spindelwechseln bzw. Einsetzen von Adaptern an den Arbeitsspindeln) mit an unterschiedlichen Werkzeugschnittstellen angebrachten Werkzeugen an der gleichen Werkzeugmaschine bearbeitet werden können.

In weiteren Ausführungsbeispielen können die erste Arbeitsspindel und die zweite Arbeitsspindel jeweils dazu eingerichtet sein, Werkzeugschnittstellen eines gleichen Werkzeugschnittstellentyps, insbesondere des Hohlschaftkegeltyps, des Morsekegeltyps oder des Steilkegeltyps, aufzunehmen.

In bevorzugten Ausführungsbeispielen bildet das Maschinengestell einen Bearbeitungsraum aus und die Achsschlitten-Baugruppe ist vorzugsweise über dem Bearbeitungsraum auf dem Maschinengestell angeordnet.

Vorzugsweise wird die Werkstückspanneinrichtung an der Achsschlitten-Baugruppe gehalten und ist vorzugsweise dazu eingerichtet, das Werkstück bzw. eine das Werkstück haltende Werkstückpalette hängend oder seitlich hängend einzuspannen, insbesondere zur Überkopfbearbeitung des an der Werkstückspanneinrichtung hängend eingespannten bzw. überkopfeingespannten Werkstücks. Dies ermöglicht einen optimalen Spänefall, bei dem die Späne direkt unter dem Werkstück in eine etwaige Späneauffangwanne fallen können, ohne das Werkstück oder Antriebe bzw. andere Werkzeugmaschinenkomponenten zu verschmutzen.

In bevorzugten Ausführungsbeispielen umfasst die Werkzeugmaschine weiterhin eine Fördereinrichtung zum Fördern von Werkstücken, insbesondere mit nach oben oder seitlich ausgerichteter Werkstückpalette, zu einer Einspannposition zur Aufnahme durch die Werkstückspanneinrichtung von oben zum hängenden oder seitlich hängenden Einspannen eines der Werkstücke an der Werkstückspanneinrichtung, und/oder zum Fördern eines der Werkstücke, insbesondere mit nach oben oder seitlich ausgerichteter Werkstückpalette, aus einer Ausspannposition nach Lösen des Werkstücks aus der hängenden oder seitlich hängenden Einspannung durch die Werkstückspanneinrichtung.

In bevorzugten Ausführungsbeispielen ist die Achsschlitten-Baugruppe weiterhin dazu eingerichtet, das an der Werkstückspanneinrichtung eingespannte Werkstück mittels zumindest einer steuerbaren Rundachse rotatorisch zu verfahren; das an der Werkstückspanneinrichtung eingespannte Werkstück mittels zwei steuerbaren Rundachsen um jeweilige Rotationsachsen, die schräg oder senkrecht zueinander ausgerichtet sind, rotatorisch zu verfahren; oder das an der Werkstückspanneinrichtung eingespannte Werkstück mittels drei steuerbaren Rundachsen um jeweilige Rotationsachsen, von denen zumindest eine Rotationsachse schräg oder senkrecht zu zumindest einer anderen Rotationsachse ausgerichtet ist, rotatorisch zu verfahren.

In bevorzugten Ausführungsbeispielen ist die Achsschlitten-Baugruppe weiterhin dazu eingerichtet, das an der Werkstückspanneinrichtung eingespannte Werkstück mittels zumindest drei steuerbarer Linearachsen linear zu verfahren.

In bevorzugten Ausführungsbeispielen ist die jeweilige an der Bearbeitungsposition positionierte Arbeitsspindel mittels eines aufgenommenen Werkzeugs dazu eingerichtet, das an der Werkstückspanneinrichtung eingespannte Werkstück zu bearbeiten.

Gemäß einem weiteren Aspekt kann eine Werkzeugmaschine bereitgestellt werden, mit einem Maschinengestell, einer Werkstückspanneinrichtung zum Überkopfeinspannen eines Werkstücks, einer an dem Maschinengestell angeordneten Achsschlitten-Baugruppe, die dazu eingerichtet ist, das an der Werkstückspanneinrichtung überkopfeingespannte Werkstück mittels einer vertikal verfahrbaren steuerbaren ersten Linearachse in einer Y-Richtung vertikal linear zu verfahren und mittels einer horizontal verfahrbaren steuerbaren zweiten Linearachse in einer Z-Richtung horizontal linear zu verfahren, und einer an dem Maschinengestell angeordneten Spindelträger-Baugruppe mit zumindest zwei unabhängig voneinander linear verfahrbaren werkzeugtragenden Arbeitsspindeln.

Vorzugsweise sind eine erste Arbeitsspindel in einer S1-Richtung und eine zweite Arbeitsspindel in einer S2-Richtung verfahrbar, wobei die S2-Richtung vorzugsweise schräg oder senkrecht zu der S1-Richtung (vorzugsweise mit einem Winkel kleiner oder gleich 90 Grad zueinander, insbesondere kleiner oder gleich 45 Grad zueinander) ausgerichtet ist, und/oder wobei die S1- und S2-Richtungen eine Ebene aufspannen, die bevorzugt senkrecht ausgerichtet ist zu einer Ebene, die von den Y- und Z-Richtungen aufgespannt wird.

Die Werkzeugmaschine gemäß dieser Aspekte ist mit allen vorstehend beschriebenen Aspekten und Merkmalen von Ausführungsbeispielen kombinierbar.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### Kurzbeschreibung der Figuren

**Fig. 1** zeigt eine beispielhafte Perspektivdarstellung einer Werkzeugmaschine gemäß einem Ausführungsbeispiel der Erfindung;
**Fig. 2A** zeigt eine Vorderansicht der Werkzeugmaschine aus Fig. 1;
**Fig. 2B** zeigt beispielhaft eine rechte Seitenansicht der Werkzeugmaschine aus Fig. 1;
**Fig. 2C** zeigt eine beispielhafte linke Seitenansicht der Werkzeugmaschine aus Fig. 1;
**Fig. 2D** zeigt beispielhaft eine Rückansicht der Werkzeugmaschine aus Fig. 1;
**Fig. 2E** zeigt beispielhaft eine Unteransicht der Werkzeugmaschine aus Fig. 1;
**Fig. 2F** zeigt beispielhaft eine Draufsicht der Werkzeugmaschine aus Fig. 1;
**Figs. 3A** bis **3E** zeigen weitere beispielhafte Perspektivdarstellungen der Werkzeugmaschine aus Fig. 1;
**Figs. 4A** bis **4C** zeigen weitere beispielhafte Perspektivdarstellungen der Werkzeugmaschine aus Fig. 1 (beispielhaft ohne Werkzeugmagazin);
**Figs. 5A** und **5B** zeigen beispielhafte Perspektivdarstellungen einer Achsschlitten-Baugruppe einer Werkzeugmaschine gemäß einem Ausführungsbeispiel;
**Figs. 6A** bis **6C** zeigen beispielhafte Perspektivdarstellungen einer Achsschlitten-Baugruppe einer Werkzeugmaschine gemäß einem weiteren Ausführungsbeispiel (beispielhaft gemäß Fig. 1);
**Fig. 7A** zeigt eine beispielhafte Perspektivschnittdarstellung der Werkzeugmaschine aus Fig. 1 mit einer vertikalen Schnittebene senkrecht zur Z-Achsrichtung;
**Fig. 7B** zeigt eine beispielhafte Perspektivschnittdarstellung der Werkzeugmaschine aus Fig. 1 mit einer vertikalen Schnittebene senkrecht zur X-Achsrichtung;
**Figs. 8A** und **8B** zeigen beispielhafte Perspektivdarstellungen der Spindelbaugruppe und des Werkzeugmagazins der Werkzeugmaschine aus Fig. 1;
**Fig. 8C** zeigt eine beispielhafte perspektivische Detaildarstellung einer Arbeitsspindel der Werkzeugmaschine aus Fig. 1 an der Werkzeugwechselposition; und
**Figs. 9A** und **9B** zeigen beispielhafte Perspektivdarstellungen des Werkzeugmagazins der Werkzeugmaschine aus Fig. 1.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Die angefügten Darstellungen betreffen Ausführungsbeispiele der vorliegenden Erfindung und zeigen beispielhafte Darstellungen einer Werkzeugmaschine. Lediglich beispielhaft handelt es sich um eine (Doppel-Spindel-)Fräsmaschine mit zwei beispielhaft parallel arbeitenden, werkzeugtragenden Arbeitsspindeln sowie einer numerisch steuerbaren Maschinenkinematik mit beispielhaft drei (X-, Y- und Z-Achsen) bzw. beispielhaft fünf (X-, Y- und Z-Achsen und einschließlich der S1- und S2-Achsen der linear verfahrbaren Arbeitsspindeln 41 und 42) steuerbaren Linearachsen für relative Translationsbewegungen zwischen Werkzeug und Werkstück, umfassend eine vertikale Y-Achse, eine horizontale Z-Achse und eine horizontal verlaufende X-Achse, und mit beispielhaft zwei oder drei steuerbaren, beispielhaft aufeinander aufbauenden Rundachsen (beispielhaft eine vertikal ausgebildete C-Achse und eine schräg ausgerichtete B-Achse, und ggf. eine weitere vertikal ausgebildete A-Achse), bei der beispielhaft zwei oder drei der Linearachsen (Y- und Z-Achsen oder X-, Y- und Z-Achsen) und die zwei oder drei steuerbaren Rundachsen das Werkstück verfahren können, und die Bearbeitungsposition der bearbeitenden Arbeitsspindel bei Bearbeitung des Werkstücks entweder feststehend bleiben kann oder durch die jeweiligen S1- bzw. S2-Achsen verfahrbar ist.

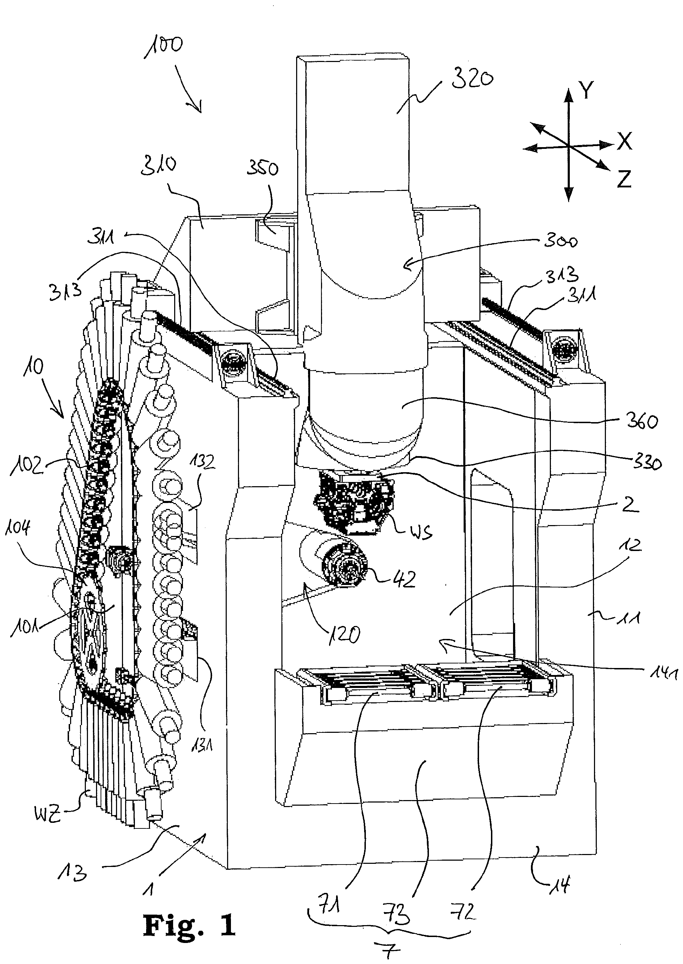

Beispielhaft ist die Werkzeugmaschine 100 gemäß Figs. 1 bis 4C insbesondere als numerisch steuerbare (Doppel-Spindel-)Fräsmaschine mit sechs antreibbaren Achsen X, Y, Z, A, B und C ausgebildet, insbesondere mit drei Linearachsen, wobei die drei Linearachsen X, Y und Z beispielhaft orthogonal zueinander ausgerichtet sind, und mit zwei bzw. drei Rundachsen umfassend eine beispielhafte schräg ausgerichtete Schwenkachse (B-Achse) und eine daran aufbauende Drehachse (C-Achse) mit beispielhaft durch Verschwenken der Schwenkachse zur Z-Achse parallel oder zur Y-Achse parallel ausgerichtbarer Rotationsachse, je nach Schwenkwinkel der Schwenkachse (B-Achse), wobei in Ausführungsbeispielen eine weitere vertikale A-Achse (als Schwenk- oder Drehachse) bereitgestellt werden kann.

Zusätzlich sind beispielhaft zwei weitere für Spindelbewegungen bereitgestellte Linearachsen S1 und S2 schräg zueinander in der X-Y-Ebene ausgerichtet vorgesehen. Hierbei sind diese Achsen S1 und S2 insbesondere verwendbar, die jeweilige Spindel 41 bzw. 42 zwischen der Bearbeitungsposition im Bearbeitungsraum und der jeweiligen Werkzeugwechselposition zu verfahren, jedoch können diese S1- und S2-Achsen in Ausführungsbeispielen auch verwendbar sein, die Relativbewegung des Werkzeugs zum Werkstück bei Bearbeitung des Werkstücks zu verfahren.

In weiteren Ausführungsbeispielen ist es möglich, eine oder mehrere der bereitgestellten Linear- und/oder Schwenk- bzw. Drehachsen wegzulassen bzw. eine oder mehrere zusätzliche Linear- und/oder Schwenk- bzw. Drehachsen vorzusehen, z.B. auch eine oder mehrere Linear- und/oder Schwenk- bzw. Drehachsen zum weiteren Verfahren des Werkzeugs bzw. der Spindeln.

Hierbei sei erwähnt, dass der Unterschied zwischen einer Drehachse und einer Schwenkachse der ist, dass eine Drehachse in beide Richtungen um ihre Rotationsachse rotatorisch steuerbar ist, wobei ggf. eine Drehung um 360 Grad oder mehr oder ggf. um 720 Grad oder mehr möglich ist, und dass eine Schenkachse in beide Richtungen um ihre Rotationsachse zwischen einer ersten und einer zweiten Winkelposition rotatorisch steuerbar ist, wobei die Winkelpositionen festgelegt sind ggf. mit einem Winkelabstand von 360 Grad oder weniger, z.B. als 90 Grad, 120 Grad, 180 Grad, 270 Grad oder 360 Grad. Als Oberbegriff für sowohl Drehachsen als auch Schwenkachsen kann ggf. der Begriff Rundachse verwendet werden.

Weiterhin kann die Werkzeugmaschine 100 eine numerische Maschinensteuerung (z.B. NC- bzw. CNC-Steuerung ggf. mit einer oder mehrerer NC- und PLC-Steuereinheiten) und/oder ein Maschinensteuerungs-Bedienpult umfassen (nicht dargestellt), sowie ggf. ein Werkzeugmaschinengehäuse und/oder einen Schaltschrank aufweisen (nicht dargestellt).

Beispielhaft ist die Werkzeugmaschine 100 weiterhin derart ausgebildet, dass das Werkstück über Kopf eingespannt werden kann und eine Überkopfbearbeitung des Werkstücks ermöglicht ist, bei der ein optimaler Spänefall nach unten erfolgt und auf einfache Weise in einer Späneauffangwanne aufgefangen bzw. gesammelt werden kann.

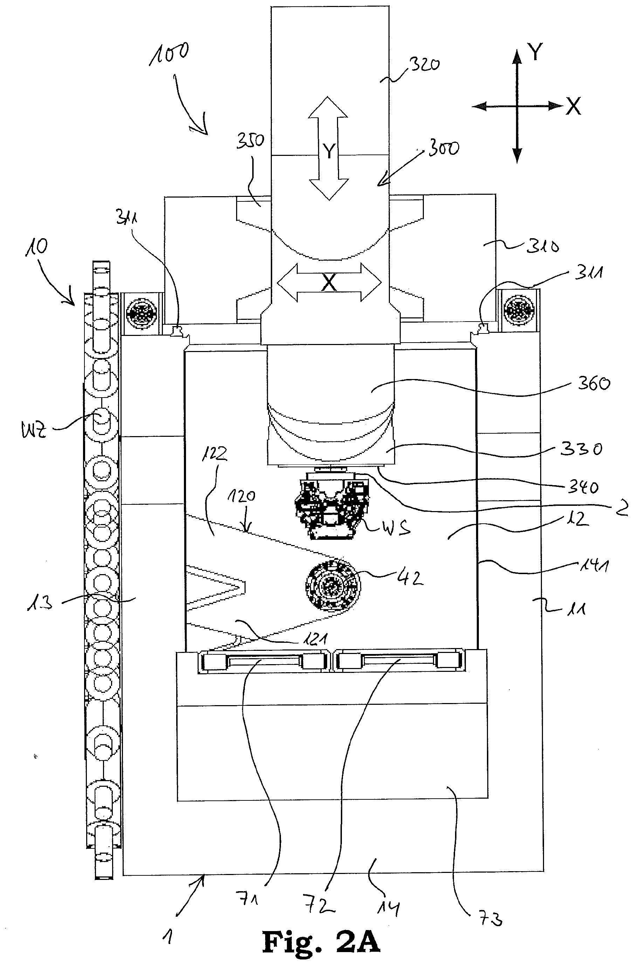

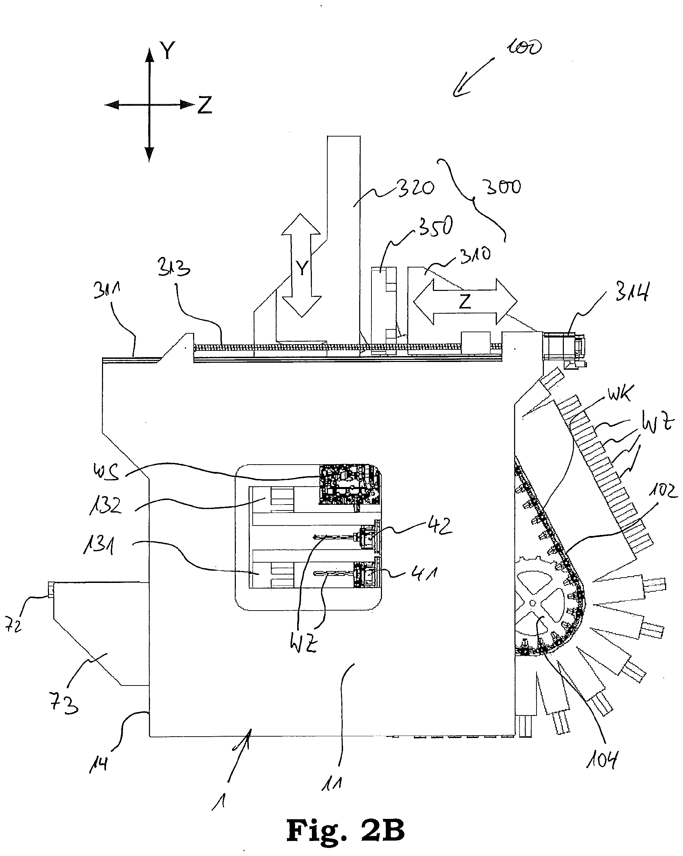

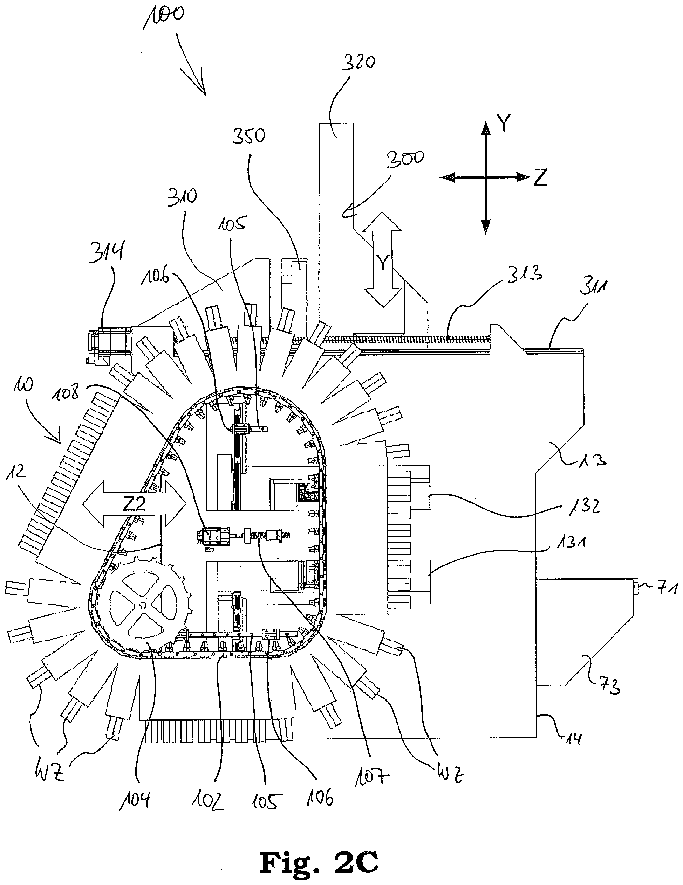

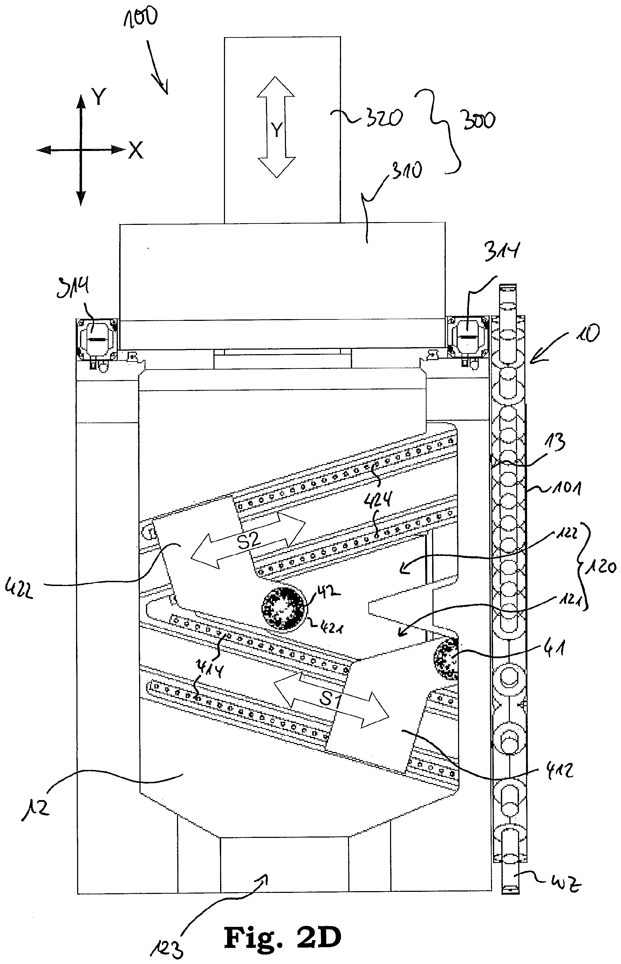

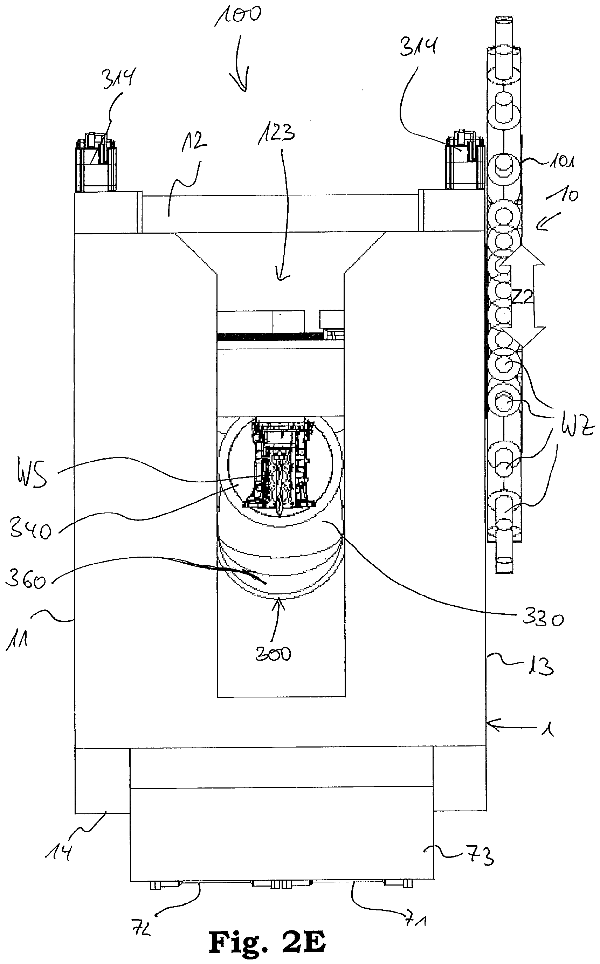

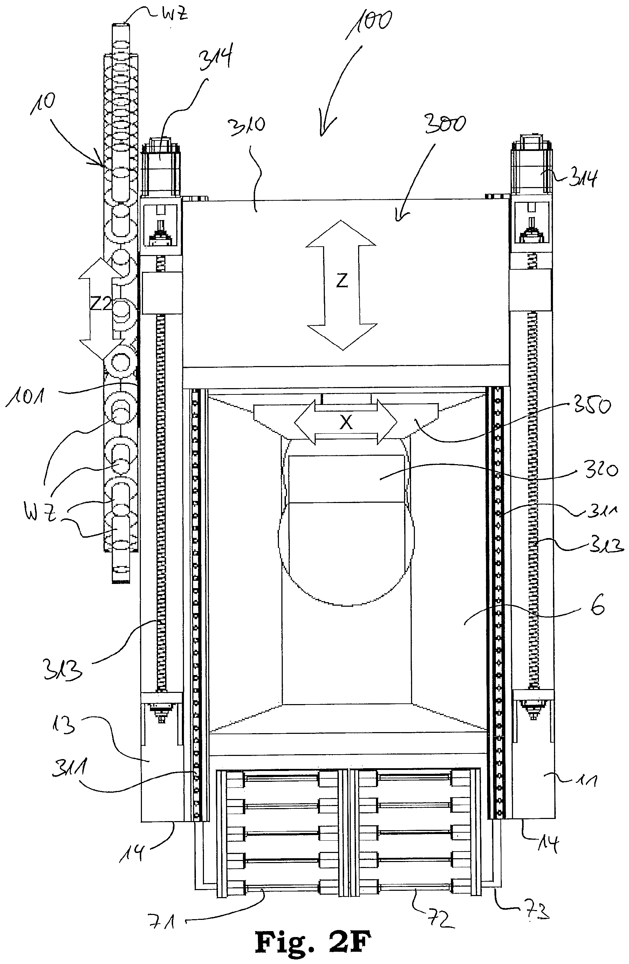

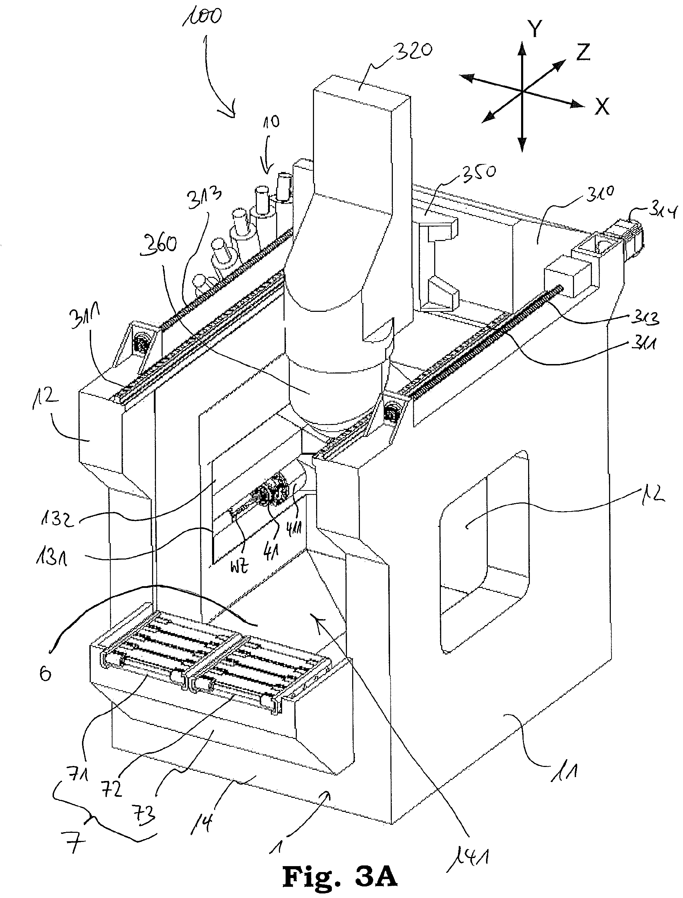

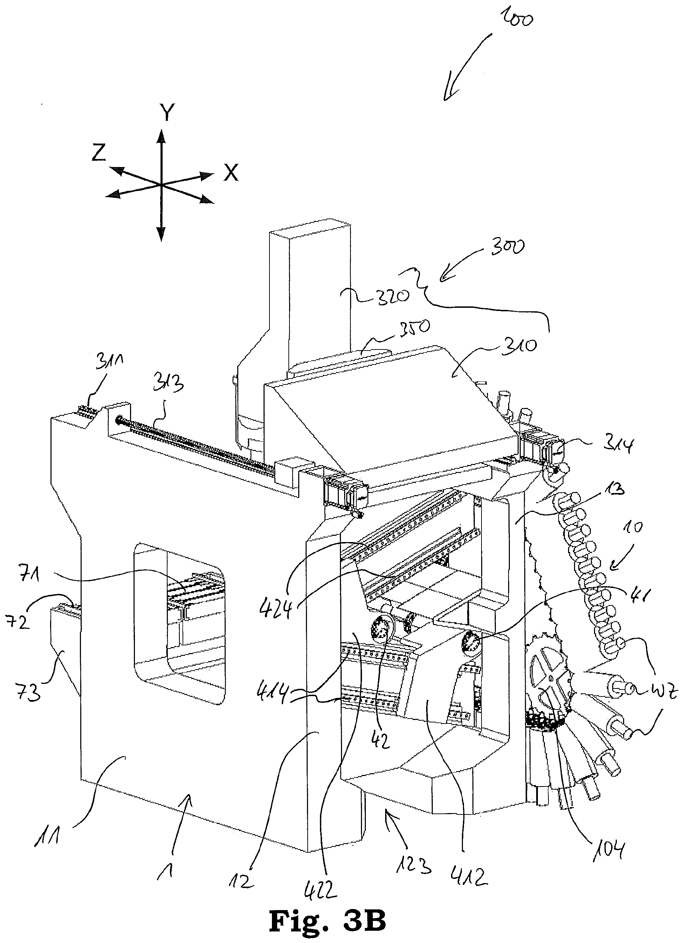

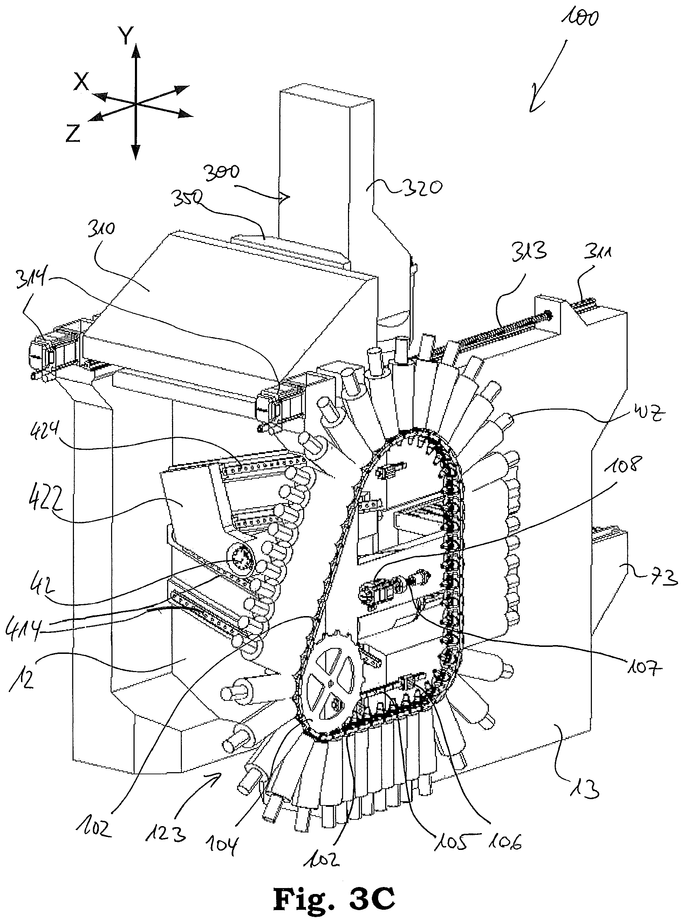

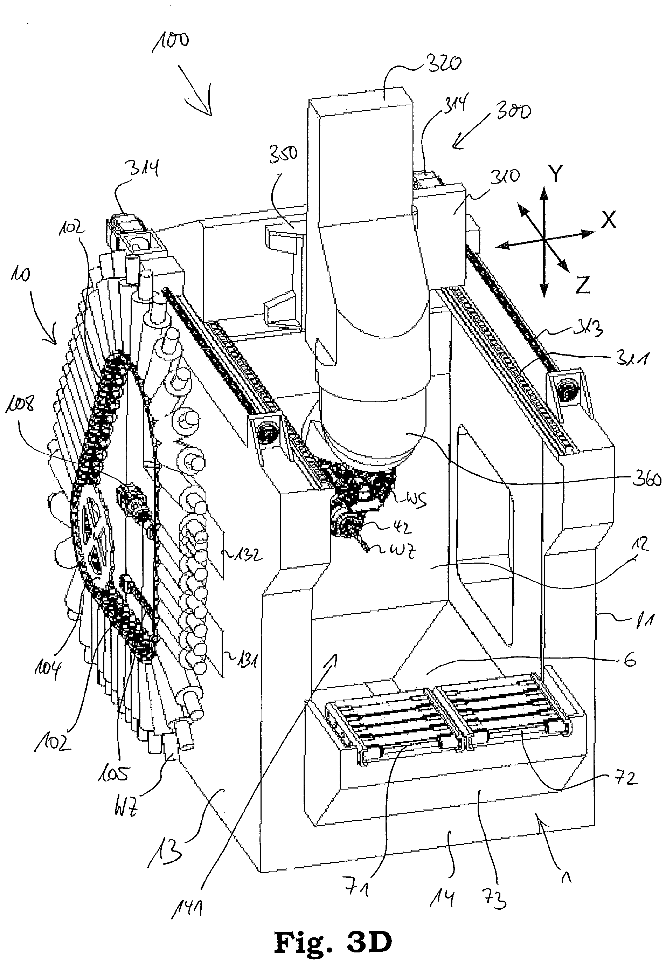

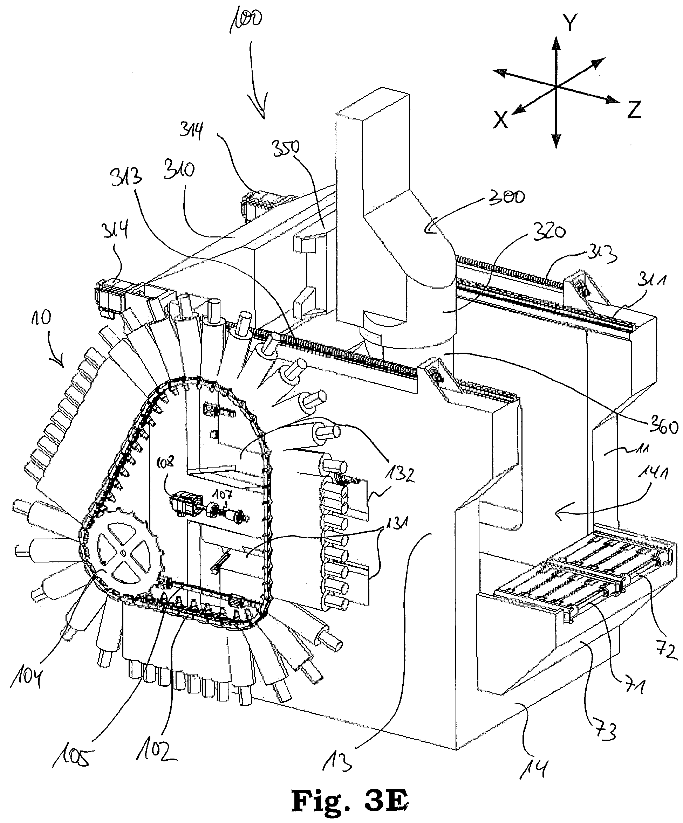

Betreffend das Ausführungsbeispiel gemäß Figs. 1 bis 3E zeigen: **Fig. 1** eine beispielhafte Perspektivdarstellung der Werkzeugmaschine 100 (von schräg-vorne-links-oben); **Fig. 2A** eine beispielhafte Vorderansicht der Werkzeugmaschine 100; **Fig. 2B** eine beispielhafte rechte Seitenansicht der Werkzeugmaschine 100; **Fig. 2C** eine beispielhafte linke Seitenansicht der Werkzeugmaschine 100; **Fig. 2D** eine beispielhafte Rückansicht der Werkzeugmaschine 100; **Fig. 2E** eine beispielhafte Unteransicht der Werkzeugmaschine 100; **Fig. 2F** eine beispielhafte Draufsicht der Werkzeugmaschine 100; **Fig. 3A** eine weitere beispielhafte Perspektivdarstellung der Werkzeugmaschine 100 (von schräg-vorne-rechts-oben); **Fig. 3B** eine weitere beispielhafte Perspektivdarstellung der Werkzeugmaschine 100 (von schräg-hinten-links-oben); **Fig. 3C** eine weitere beispielhafte Perspektivdarstellung der Werkzeugmaschine 100 (von schräg-hinten-rechts-oben); und **Figs. 3D** und **3E** weitere beispielhafte Perspektivdarstellungen der Werkzeugmaschine 100 (von schräg-vorne-links-oben).

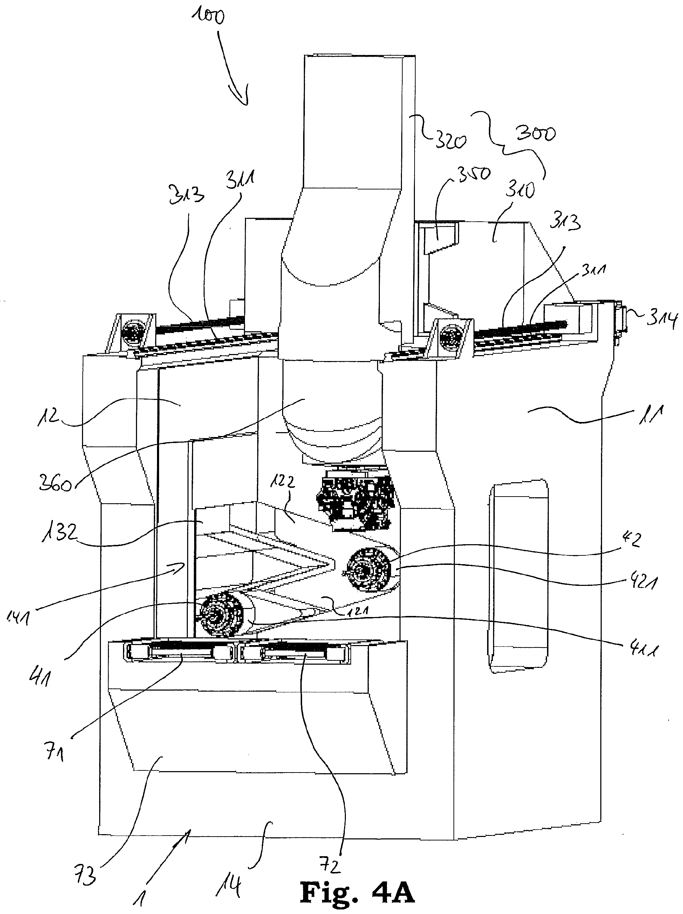

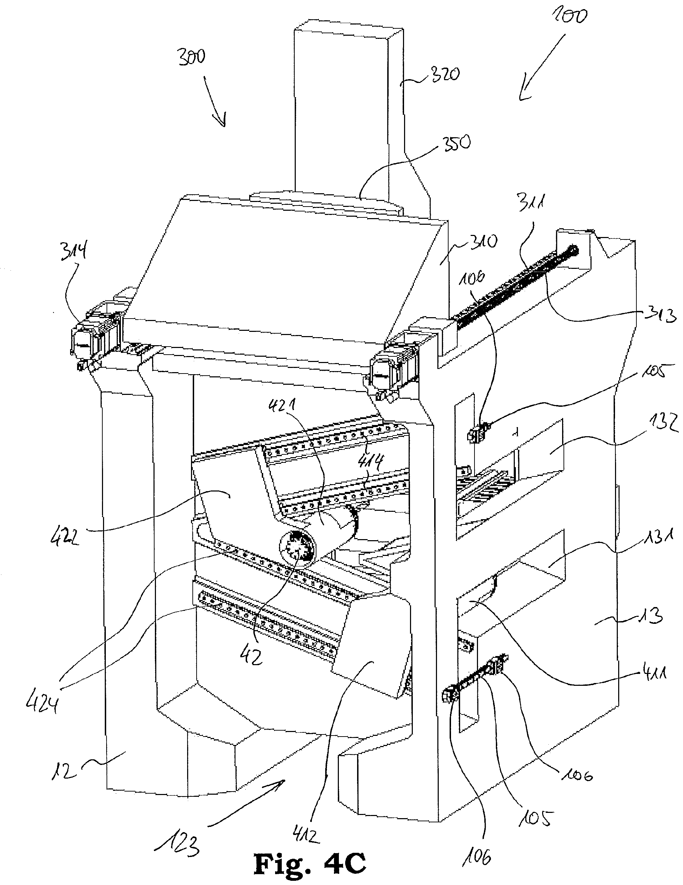

Die Werkzeugmaschine 100 gemäß Figs. 1 bis 3E umfasst ein ggf. auf Standfußelementen (nicht dargestellt) aufstellbares Maschinengestell 1. Die beispielhafte Struktur des Maschinengestells 1 ist neben den Figs. 1 bis 3E noch gut in den Figs. 4A bis 4C zu erkennen. Der Bearbeitungsraum der Werkzeugmaschine 100 ist bevorzugt zwischen den gegenüberliegenden Trägerabschnitten 11 und 13 des Maschinengestells 1 und zwischen den gegenüberliegenden Trägerabschnitten 12 und 14 des Maschinengestells 1 gebildet.

Im oberen Teil des Trägerabschnitts 14 ist eine Werkstückwechselöffnung 141 vorgesehen, durch die Werkstücke zwischen dem inneren Bearbeitungsraum und dem Werkstückeingabe- bzw. Werkstückausgabepositionen an den Förderabschnitten 71 und 72 hindurch bewegt können, zum Werkstückwechsel an der Werkstückspanneinrichtung 2 an der Achsschlitten-Baugruppe 3 bzw. 300 (siehe folgende detailliertere Beschreibung).

Es zeigen: **Figs. 4A bis 4C** weitere beispielhafte Perspektivdarstellungen der Werkzeugmaschine 100 aus Fig. 1 (beispielhaft ohne Werkzeugmagazin 10).

Das Maschinengestell 1 umfasst einen ersten Trägerabschnitt 11 (auf der von Vorne gesehen rechten Seite der Werkzeugmaschine 100), einen zweiten (hinteren) Trägerabschnitt 12 mit einer Späneabführöffnung 123 und einen dritten Trägerabschnitt 13 mit jeweiligen Werkzeugwechselöffnungen 131 und 132 (auf der von Vorne gesehen linken Seite der Werkzeugmaschine 100).

Auf der unteren Vorderseite des Maschinengestells 1 ist beispielhaft ein vierter Trägerabschnitt 14 vorgesehen, an dem beispielhaft ein Fördereinrichtungsträgerabschnitt 73 einer später beschriebenen Werkstück-Fördereinrichtung 7 gehalten ist, über dem die Werkstückwechselöffnung 141 ausgebildet ist. In weiteren Ausführungsbeispielen kann dieser Fördereinrichtungsträgerabschnitt 73 als beispielhaft in X-Richtung horizontal verfahrbarer Fördereinrichtungsträgerschlitten 73 bereitgestellt werden.

Beispielhaft tragen der erste Trägerabschnitt 11 und der dritte Trägerabschnitt 13 des Maschinengestells 1 eine beispielhaft oberhalb des Maschinengestells 1 angeordnete, verfahrbare Achsschlitten-Baugruppe 300, die beispielhaft die Y-, X- und Z-Linearachsen als auch die Rundachsen A, B und C der Maschinenkinematik aufweist.

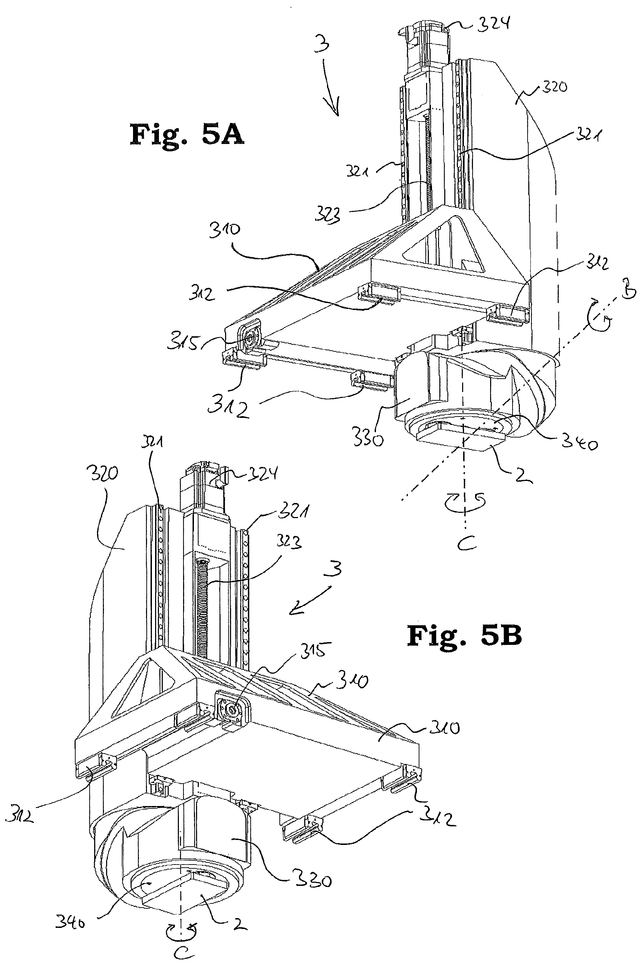

**Figs. 5A** und **5B** zeigen beispielhafte Perspektivdarstellungen einer beispielhaften alternativen Ausführung einer Achsschlitten-Baugruppe 3 der Werkzeugmaschine 100. Eine derartige Achsschlitten-Baugruppe 3 kann ebenfalls auf einem Maschinengestell 1 gemäß Figs. 1 bis 4C aufgesetzt werden, um eine Werkzeugmaschine 100 eines weiteren Ausführungsbeispiels bereitzustellen.

Die Achsschlitten-Baugruppe 3 umfasst beispielhaft einen ersten Achsschlitten 310 der horizontalen Z-Achse und einen zweiten Achsschlitten 320 der vertikalen Y-Achse, als auch einen Schwenkkopf 330 der B-Achse und ein Drehelement 340 der C-Achse.

Insbesondere ist der erste Achsschlitten 310 verfahrbar auf dem Maschinengestell 1 der Werkzeugmaschine 100 anbringbar, wobei der erste Achsschlitten 310 als Basis der Achsschlitten-Baugruppe 3 bereitgestellt ist und ein Verfahren des ersten Achsschlittens 310 die ganze Achsschlitten-Baugruppe 3 quasi als Einheit verfährt.

Der erste Achsschlitten 310 trägt insbesondere den zweiten Achsschlitten 320, der an dem ersten Achsschlitten 310 vertikal verfahrbar ist, und der zweite Achsschlitten 320 trägt den schwenkbaren Schwenkkopf 330 der B-Achse, wobei der Schwenkkopf 330 wiederum das drehbare Drehelement 340 der C-Achse trägt. Insofern bauen die Z-, Y-, B- und C-Achsen beispielhaft aufeinander auf. Im Folgenden werden diese Antriebsachsen der Maschinenkinematik an der Achsschlitten-Baugruppe 3 beispielhaft näher beschrieben.

Die Z-Achse umfasst neben dem horizontal in Z-Richtung verfahrbaren, ersten Achsschlitten 310 beispielhaft weiterhin erste Achsführungen 311, die auf den Trägerabschnitten 11 und 13 des Maschinengestells 1 angeordnet sind und auf denen beispielhaft der erste Achsschlitten 310 in Z-Richtung auf ersten Achsführungselementen 312 linear verfahrbar geführt ist, eine drehbar gelagerte erste Gewindewelle 313 und einen ersten Achsantrieb 314 zum rotatorischen Antreiben der ersten Gewindewelle 313.

Die ersten Achsführungen 311 verlaufen beispielhaft in horizontaler Richtung (Z-Richtung), die sich beispielhaft von der Vorderseite der Werkzeugmaschine 100 horizontal zur Rückseite der Werkzeugmaschine 100 erstreckt, und sind beispielhaft auf dem Maschinengestell 1 und insbesondere auf den Trägerabschnitten 11 und 13 angeordnet. Die erste Gewindewelle 313 und der erste Achsantrieb 314 sind beispielhaft auf dem ersten Trägerabschnitt 11 des Maschinengestells 1 angeordnet und die erste Gewindewelle 313 erstreckt sich beispielhaft horizontal und parallel zu der auf dem ersten Trägerabschnitt 11 verlaufenden Achsführung 311 in Z-Richtung.

Der erste Achsschlitten 310 lagert beispielhaft in Z-Richtung horizontal linear verfahrbar mittels den ersten Achsführungselementen 312, die beispielhaft auf der Unterseite des ersten Achsschlittens 310 angeordnet sind, auf den ersten Achsführungen 311 und umfasst beispielhaft eine auf der ersten Gewindewelle 313 auf- bzw. angesetzte Gewindemutter 315 (siehe z.B. Figs. 5A und 5B), derart dass ein lineares Verfahren des ersten Achsschlittens 310 in Richtung der ersten Achsführungen 311 mittels der Kopplung über die erste Gewindewelle 313 durch den ersten Antrieb 314 angetrieben werden kann.

Die Y-Achse umfasst neben dem zweiten Achsschlitten 320 beispielhaft weiterhin zweite Achsführungen 321, auf denen der zweite Achsschlitten 320 beispielhaft vertikal in Y-Richtung geführt ist, eine drehbar gelagerte zweite Gewindewelle 323 und einen zweiten Achsantrieb 324 zum rotatorischen Antreiben der zweiten Gewindewelle 323.

Die zweiten Achsführungen 321 verlaufen beispielhaft in vertikaler Richtung (Y-Richtung), die sich beispielhaft senkrecht zur Z-Richtung der Z-Achse und senkrecht zur später beschriebenen X-Richtung der X-Achsen erstreckt, und sind beispielhaft an dem ersten Achsschlitten 310 der Z-Achse angeordnet. Die zweite Gewindewelle 323 und der zweite Achsantrieb 324 sind beispielhaft auf dem zweiten Achsschlitten 320 angeordnet und die zweite Gewindewelle 323 erstreckt sich beispielhaft vertikal und parallel zu (und zwischen den) auf dem zweiten Achsschlitten 320 verlaufenden Achsführungen 321 in Y-Richtung.

Der zweite Achsschlitten 320 lagert mittels zweiten Achsführungselementen, die beispielhaft auf einer Vorderseite des ersten Achsschlittens 310 angeordnet sind, beispielhaft vertikal in Y-Richtung linear verfahrbar mit den zweiten Achsführungen 321 auf dem zweiten Achsschlitten 320.

Die Y-Achse umfasst beispielhaft eine an dem ersten Achsschlitten 310 gehaltene und auf der zweiten Gewindewelle 323 auf- bzw. angesetzte Gewindemutter (nicht dargestellt), so dass ein lineares Verfahren des zweiten Achsschlittens 320 in Richtung der zweiten Achsführungen 321 an dem ersten Achsschlitten 310 mittels der Kopplung über die zweite Gewindewelle 323 durch den zweiten Antrieb 324 angetrieben werden kann.

An der Unterseite des zweiten Achsschlittens 320 ist beispielhaft ein Schwenkkopf 330 gehalten, der drehbar bzw. schwenkbar an dem zweiten Achsschlitten 320 gelagert ist mit einer Rotationsachse der B-Achse, die schräg zur vertikalen Y-Achse ausgerichtet ist.

Beispielhaft ist die Rotationsachse B der B-Achse 45 Grad zur Ebene der X- und Z-Richtung geneigt und beispielhaft in der Ebene der Y- und Z-Richtungen angeordnet. Der bzw. die Antriebe und etwaige Übersetzungsgetriebe und Lagerungen des Schwenkkopfes 330 sind in Figs. 5A und 5B nicht dargestellt, können aber z.B. im Inneren des zweiten Achsschlittens 320 und/oder im Inneren des Schwenkkopfes 330 angeordnet sein.

An der Unterseite des Schwenkkopfes 330 ist beispielhaft ein Drehelement 340 der Drehachse (C-Achse) gehalten, das drehbar bzw. schwenkbar an dem Schwenkkopf 330 gelagert ist, mit einer Rotationsachse der C-Achse, die parallel zur vertikalen Y-Achse ausgerichtet ist (siehe z.B. Figs. 5A und 5B) bzw. ausrichtbar ist.

Hierbei ist zu bedenken, dass in diesem Ausführungsbeispiel die Rotationsachse C der C-Achse (Drehachse) bei Verschwenken des Schwenkkopfes 330 mitschwenkt und somit nicht fest im Raum fixiert ist, sondern vielmehr in Abhängigkeit der Winkelstellung des Schwenkkopfes 330 orientiert ist. Beispielhaft ist es möglich, die Rotationsachse C der C-Achse (Drehachse) aus der in Figs. 5A und 5B gezeigten Stellung durch Verschwenken des Schwenkkopfes 330 um 180 Grad um die Rotationsachse B der B-Schwenkachse in eine horizontale und parallel zur Z-Richtung der Z-Achse ausgerichtete Stellung zu bringen.

Der bzw. die Antriebe und etwaige Übersetzungsgetriebe und Lagerungen des Drehelements 340 sind in Figs. 5A und 5B nicht dargestellt, können aber z.B. im Inneren des zweiten Achsschlittens 320 und/oder im Inneren des Schwenkkopfes 330 angeordnet sein.

Auf der unteren Seite des Drehelements 340 ist beispielhaft eine Werkstückspanneinrichtung 2 (z.B. mit einem Werkstückpalettenhalter) angeordnet. Die Werkstückspanneinrichtung 2 ist beispielhaft dazu eingerichtet, zum Einspannen eines Werkstücks WS an dem Werkstückpalettenhalter der Werkstückspanneinrichtung 2 eine Werkstückpalette einzuspannen, z.B. durch einen automatischen Greifmechanismus und/oder auch durch elektro-magnetische bzw. induktive Spannmechanismen.

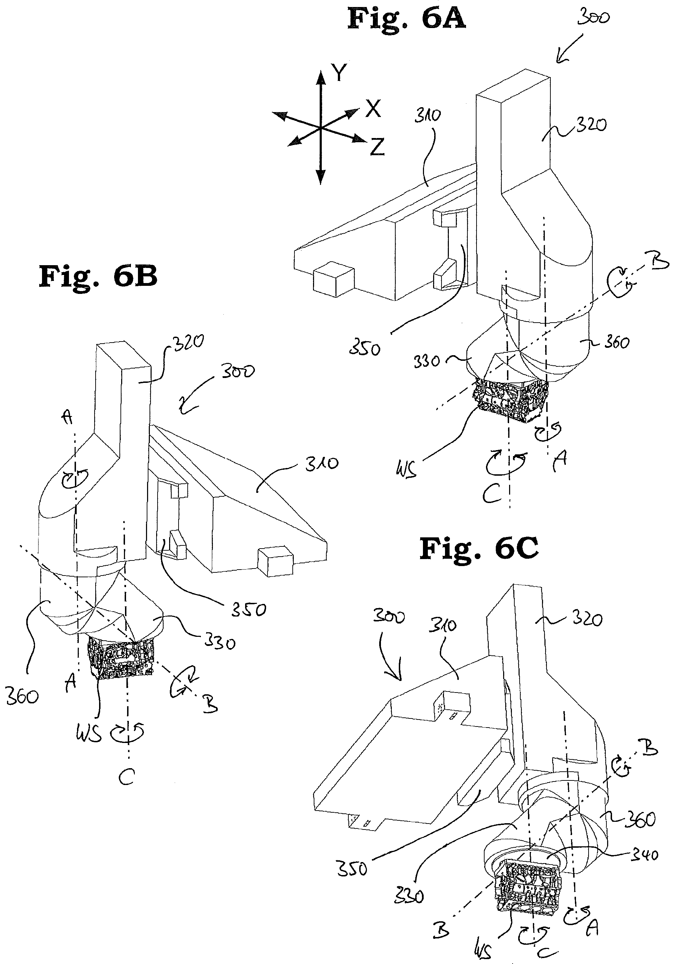

**Figs. 6A, 6B und 6C** zeigen beispielhafte Perspektivdarstellungen einer Achsschlitten-Baugruppe 300 gemäß einem weiteren Ausführungsbeispiel (welches beispielhaft auch auf der Werkzeugmaschine 100 gemäß Figs. 1 bis 4C auf dem Maschinengestell 1 aufgesetzt ist).

Im Unterschied zu der Achsschlitten-Baugruppe 3 gemäß dem vorstehenden Ausführungsbeispiel in Figs. 5A und 5B wird hierbei in dem Ausführungsbeispiel gemäß Figs. 6A bis 6C beispielhaft eine zusätzliche X-Achse mit einem zusätzlichen X-Achsschlitten 350 (beispielhaft zwischen den Achsschlitten 310 und 320) und beispielhaft eine zusätzliche Rundachse A mit einem Schwenkkopf 360 (beispielhaft zwischen den Achsschlitten 320 und dem Schwenkkopf 330) an der Achsschlitten-Baugruppe 300 bereitgestellt.

Die Achsschlitten-Baugruppe 300 umfasst beispielhaft einen ersten Achsschlitten 310 der horizontalen Z-Achse (analog zur Achsschlitten-Baugruppe 3), einen zweiten Achsschlitten 350 der horizontalen X-Achse und einen dritten Achsschlitten 320 der vertikalen Y-Achse (analog zur Achsschlitten-Baugruppe 3), als auch einen Schwenkkopf 330 der B-Achse (analog zur Achsschlitten-Baugruppe 3) und ein Drehelement 340 der C-Achse (analog zur Achsschlitten-Baugruppe 3) sowie einen weiteren Schwenkkopf 360 einer A-Achse mit vertikaler Rotationsachse A.

Insbesondere ist der erste Achsschlitten 310 (analog zur Achsschlitten-Baugruppe 3) in der horizontalen Z-Richtung verfahrbar auf dem Maschinengestell 1 der Werkzeugmaschine 100 anbringbar, wobei der erste Achsschlitten 310 als Basis der Achsschlitten-Baugruppe 300 bereitgestellt ist und ein Verfahren des ersten Achsschlittens 310 die ganze Achsschlitten-Baugruppe 300 quasi als Einheit verfährt.

Der erste Achsschlitten 310 trägt insbesondere den zweiten Achsschlitten 320, der an dem ersten Achsschlitten 310 horizontal in X-Richtung verfahrbar ist, und der zweite Achsschlitten 310 trägt den dritten Achsschlitten 320, der an dem zweiten Achsschlitten 310 vertikal in Y-Richtung verfahrbar ist (analog zum zweiten Achsschlitten 320 der Achsschlitten-Baugruppe 3), und der dritte Achsschlitten 320 trägt den schwenkbaren Schwenkkopf 360 der A-Achse und der Schwenkkopf 360 trägt den Schwenkkopf 330 der B-Achse, wobei der Schwenkkopf 330 wiederum das drehbare Drehelement 340 der C-Achse trägt(analog zur Achsschlitten-Baugruppe 3). Insofern bauen die Z-, X-, Y-, A-, B- und C-Achsen beispielhaft aufeinander auf.

An der Unterseite des dritten Achsschlittens 320 ist beispielhaft ein Schwenkkopf 360 gehalten, der drehbar bzw. schwenkbar an dem dritten Achsschlitten 320 gelagert ist mit einer vertikalen Rotationsachse A der A-Achse. Der bzw. die Antriebe und etwaige Übersetzungsgetriebe und Lagerungen des Schwenkkopfes 360 sind nicht dargestellt, können aber z.B. im Inneren des zweiten Achsschlittens 320 und/oder im Inneren des Schwenkkopfes 360 angeordnet sein.

An der Unterseite des Schwenkkopfs 360 ist beispielhaft der Schwenkkopf 330 gehalten, der drehbar bzw. schwenkbar an dem Schwenkkopf 360 gelagert ist mit einer Rotationsachse B der B-Achse, die schräg ausgerichtet ist zur Rotationsachse A bzw. zur Y-Richtung der Y-Achse.

Beispielhaft ist die Rotationsachse B der B-Achse analog zur Achsschlitten-Baugruppe 3 in einem Winkel von 45 Grad zur Ebene der X- und Z-Richtung geneigt und beispielhaft in der Ebene der Y- und Z-Richtungen angeordnet. Der bzw. die Antriebe und etwaige Übersetzungsgetriebe und Lagerungen des Schwenkkopfes 330 sind nicht dargestellt, können aber z.B. im Inneren des Schwenkkopfes 330 und/oder im Inneren des Schwenkkopfes 360 angeordnet sein.

Hierbei ist zu bedenken, dass in diesem Ausführungsbeispiel die Rotationsachse B der B-Achse (Schwenkachse) bei Verschwenken des Schwenkkopfes 360 mitschwenkt und somit nicht fest im Raum fixiert ist, sondern vielmehr in Abhängigkeit der Winkelstellung des Schwenkkopfes 360 orientiert ist. Dieser Schwenkkopf 360 kann dazu genutzt werden, das Werkstück WS entweder zu den Spindeln hin ausgerichtet zu halten (mit zu den Spindeln hin ausgerichteter Rotationsachse B), oder zu der Fördereinrichtung 7 hin zu verschwenken (mit zu der Fördereinrichtung 7 hin ausgerichteter Rotationsachse B), z.B. für einen Werkstückwechsel.

An der Unterseite des Schwenkkopfes 330 ist beispielhaft ein Drehelement 340 der Drehachse (C-Achse) gehalten (analog zur Achsschlitten-Baugruppe 3), das drehbar bzw. schwenkbar an dem Schwenkkopf 330 gelagert ist, mit einer Rotationsachse der C-Achse, die parallel zur vertikalen Y-Achse ausgerichtet ist bzw. ausrichtbar ist.

Hierbei ist zu bedenken, dass in diesem Ausführungsbeispiel die Rotationsachse C der C-Achse (Drehachse) bei Verschwenken des Schwenkkopfes 330 mitschwenkt und somit nicht fest im Raum fixiert ist, sondern vielmehr in Abhängigkeit der Winkelstellung des Schwenkkopfes 330 orientiert ist.

Der bzw. die Antriebe und etwaige Übersetzungsgetriebe und Lagerungen des Drehelements 340 sind in Figs. 5A und 5B nicht dargestellt, können aber z.B. im Inneren des Schwenkkopfes 330 angeordnet sein.

Auf der unteren Seite des Drehelements 340 ist beispielhaft eine Werkstückspanneinrichtung 2 (z.B. mit einem Werkstückpalettenhalter) angeordnet. Die Werkstückspanneinrichtung 2 ist beispielhaft dazu eingerichtet, zum Einspannen eines Werkstücks WS an dem Werkstückpalettenhalter der Werkstückspanneinrichtung 2 eine Werkstückpalette einzuspannen, z.B. durch einen automatischen Greifmechanismus und/oder auch durch elektro-magnetische bzw. induktive Spannmechanismen.

Hierbei ist die Werkzeugmaschine 100 mit einer Achsschlitten-Baugruppe 300 bzw. 3 des Ausführungsbeispiels gemäß Figs. 6A bis 6C als auch des Ausführungsbeispiels gemäß Figs. 5A bis 5B beispielhaft dazu eingerichtet, Werkstücke WS in Überkopfbearbeitung an der Werkzeugmaschine 100 zu bearbeiten, z.B. indem ein an einer Werkstückpalette befestigtes Werkstück WS zur Überkopfbearbeitung an der Werkzeugmaschine hängend (bzw. kopfüber hängend) mit nach oben weisender Werkstückpalette an dem Werkstückpalettenhalter der Werkstückspanneinrichtung 2 eingespannt werden kann.

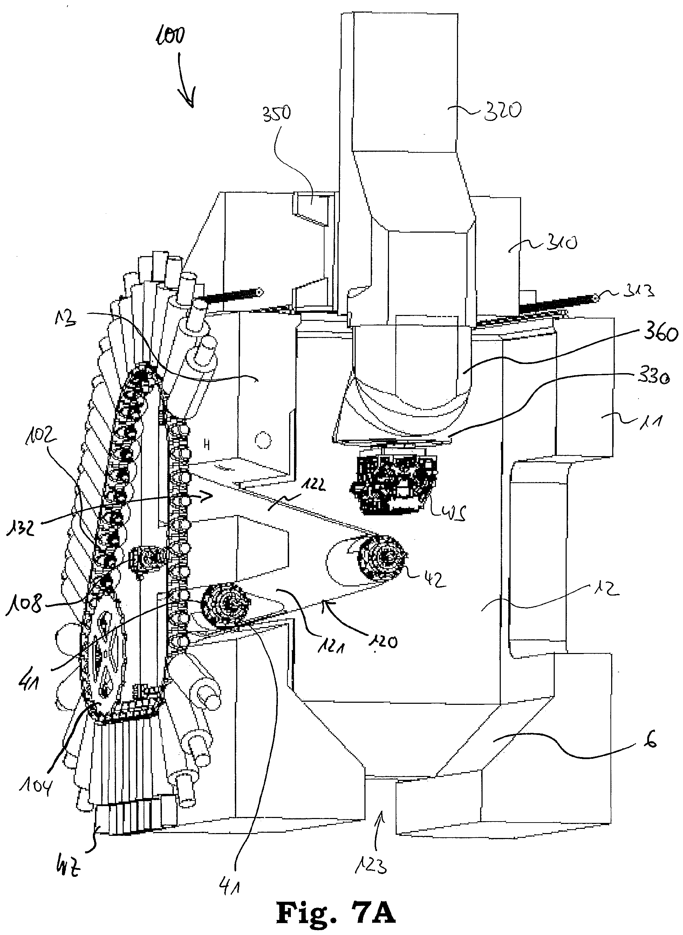

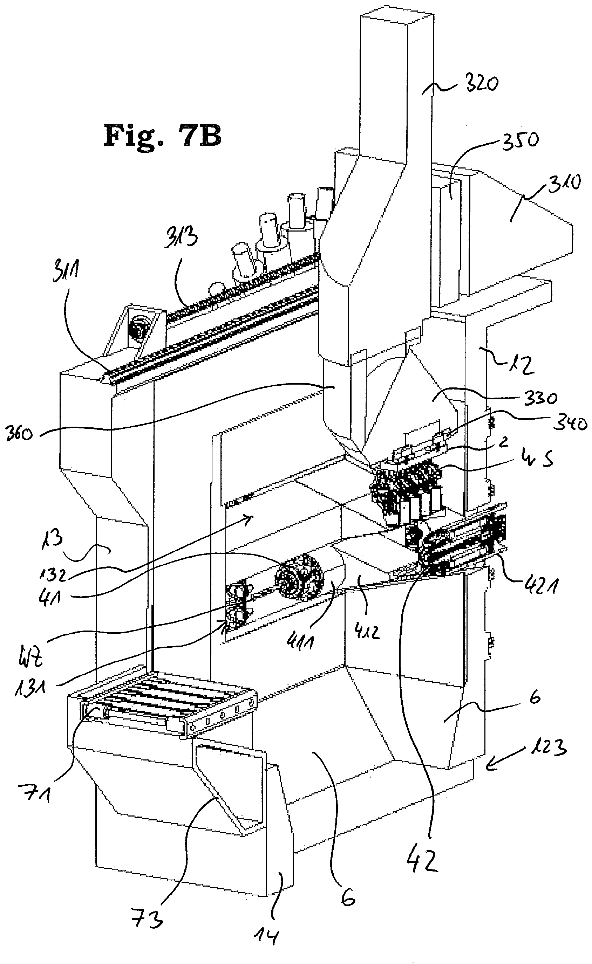

Durch die hängende Überkopfbearbeitung eines Werkstücks WS ergibt sich vorteilhaft ein optimales Spänefallverhalten beim zerspanenden Bearbeiten des Werkstücks WS, da die Späne ohne Hindernis einfach nach unten fallen können, wo zum Auffangen der Späne beispielhaft eine einfach geformte (z.B. trichterförmig, wannenförmig oder kastenförmig) Späneauffangwanne 6 bereitgestellt ist. Unterhalb des hängend eingespannten Werkstücks WS müssen vorteilhaft keine Antriebs- oder Bearbeitungsbauteile angeordnet werden, die durch Spänefall verschmutzt werden könnten, und es ergibt sich somit ein vorteilhaft ungehinderter Spänefall nach unten ggf. im gesamten Bearbeitungsraum der Werkzeugmaschine, siehe insbesondere die Schnittdarstellungen gemäß Fig. 7A und 7B.

Hierbei muss insbesondere kein aufwendiger und platzraubender, maschinenintegrierter Spänefördermechanismus vorgesehen werden, sondern es ist vorteilhaft vollkommen ausreichend, platzsparend und bei einfacher kostengünstiger Bauweise einen einfach aufgebauten Späneförderer (ggf. nach herkömmlicher Bauweise) zu verwenden, der einfach mit dem Förderabschnitt direkt in eine Späneabführöffnung 123 in dem hinteren Trägerabschnitt 12 des Maschinengestells 1 eingeschoben werden kann, insbesondere ohne eine weitere komplizierte, kostspielige, maschinenintegrierte Spänefördereinrichtung vorsehen zu müssen.

Wie bereits vorstehend beschrieben umfasst das Maschinengestell 1 bespielhaft seitlich erste und dritte Trägerabschnitte 11 und 13, die beispielhaft die vorstehend beschriebene Achsschlitten-Baugruppe 3 bzw. 300 tragen, sowie einen hinteren Trägerabschnitt 12, in dem beispielhaft die vorstehend beschriebene Späneabführöffnung 123 ausgebildet ist.

Zwischen den Trägerabschnitten 11, 12 und 13 wird beispielhaft ein Bearbeitungsraum der Werkzeugmaschine ausgebildet, in dem ein an der vorstehend beschriebenen Werkstückspanneinrichtung 2 eingespanntes Werkstück WS bearbeitet werden kann. Auf der Unterseite des Bearbeitungsraums zwischen den Trägerabschnitten 11, 12 und 13 ist beispielhaft die vorstehend beschriebene Späneauffangwanne 6 angeordnet.

Weiterhin umfasst die Werkzeugmaschine 100 gemäß dem Ausführungsbeispiel nach Figs. 1 bis 4C beispielhaft eine Fördereinrichtung 7, die beispielhaft an einer Vorderseite des Maschinengestells 1 auf einem Fördereinrichtungsträgerabschnitt 73 angeordnet bzw. gehalten ist.

Die Fördereinrichtung 7 umfasst beispielhaft einen Eingabeförderabschnitt 71 zur ggf. automatischen Zuführung eines zu bearbeitenden Werkstücks durch die Werkstückwechselöffnung 141 in den Bearbeitungsraum der Werkzeugmaschine 100 und beispielhaft einen Ausgabeförderabschnitt 72 zur ggf. automatischen Abführung bzw. Entnahme eines bearbeiteten Werkstücks durch die Werkstückwechselöffnung 141 aus dem Bearbeitungsraum der Werkzeugmaschine 100.

Der Eingabeförderabschnitt 71 der Fördereinrichtung 7 kann z.B. eine Werkstückeinspannposition (Einspannposition) aufweisen, an der ein zu bearbeitendes Werkstück WS durch die Werkstückspanneinrichtung 2 der Achsschlitten-Baugruppe 3 aufgenommen und eingespannt werden kann, z.B. nachdem die Werkstückspanneinrichtung 2 ein zuvor eingespanntes und bereits bearbeitetes Werkstück WS an einer Werkstückausspann- bzw. Ausgabeposition (Ausspannposition) abgelegt hat bzw. ablegen konnte, zum ggf. automatischen Wegfördern durch den die Werkstückausspann- bzw. Ausgabeposition aufweisenden Ausgabeförderabschnitt 72 der Fördereinrichtung 7.

Vor den Eingabe- und Ausgabeförderabschnitten 71 und 72 der Fördereinrichtung 7 kann die Fördereinrichtung 7 bevorzugt einen oder mehrere weitere Förderabschnitte umfassen, z.B. zum Fördern von Werkstücken zu dem Eingabeförderabschnitt 71 der Fördereinrichtung 7 und/oder zum Wegfördern von Werkstücken von dem Ausgabeförderabschnitte 72 der Fördereinrichtung 7.

In dem Ausführungsbeispiel gemäß Figs. 1 bis 4C sind die Eingabe- und Ausgabeförderabschnitte 71 und 72 der Fördereinrichtung 7 beispielhaft als Rollenförderbandabschnitte ausgebildet, jedoch ist die vorliegende Erfindung nicht auf derartige Ausführungen beschränkt und die Fördereinrichtung 7 kann zusätzlich oder alternativ auch andersartige Förderbandabschnitte umfassen, und/oder in weiteren Ausführungsbeispielen der Werkzeugmaschine mit zusätzlichen oder alternativen Automationsmaschinen, Handhabungsmaschinen, Manipulatoren und/oder Pickup-Roboter-Einrichtungen versehen sein, zum ggf. automatischen Entnehmen und/oder Bereitstellen von Werkstücken.

Der Fördereinrichtungsträgerabschnitt 73 kann in anderen Ausführungsbeispielen auch als in X-Richtung verfahrbarer Abschnitt bzw. Schlittenträger des Maschinengestells 1 bereitgestellt sein oder an diesem befestigt sein, so dass das Maschinengestell 1 beispielhaft neben den Trägerabschnitten 11 bis 13 weiterhin einen in X-Richtung verfahrbaren Fördereinrichtungsträgerabschnitt 73 aufweist.

Weiterhin umfasst die Werkzeugmaschine 100 gemäß Figs. 1 bis 4C beispielhaft eine Spindelbaugruppe 4 mit zwei werkzeugtragende Arbeitsspindeln 41 und 42, die beispielhaft in Spindelgehäusen 411 und 421 rotatorisch antreibbar gehalten und gelagert sind. Die Spindelgehäuse 411 und 421 umfassen bevorzugt im Innern jeweilige Spindelantriebe 415 und 425 zum Antreiben der Arbeitsspindeln 41 und 42 bzw. zum rotatorischen Antreiben von an den Arbeitsspindeln 41 und 42 aufgenommenen Werkzeugschnittstellen bzw. Werkzeugen, insbesondere Fräs- oder Bohrwerkzeugen.

Hierbei können die Arbeitsspindeln 41 und 42 in Ausführungsbeispielen dazu eingerichtet sein, jeweils gleiche bzw. gleichgroße Werkzeugschnittstellen aufzunehmen. In weiteren Ausführungsbeispielen ist es jedoch vorteilhaft, wenn die Arbeitsspindeln jeweils derart eingerichtet sind, dass sie jeweils unterschiedliche Werkzeugschnittstellen z.B. eines unterschiedlichen Typs und/oder einer unterschiedlichen Größe aufnehmen können. Somit sind kurzzeitig hintereinander und ohne Stillstandzeiten Bearbeitungen mit unterschiedlich großen oder unterschiedlichen Werkzeugtypen bzw. Werkzeugschnittstellentypen möglich.

**Fig. 7A** zeigt eine beispielhafte Perspektivschnittdarstellung der Werkzeugmaschine 100 aus Fig. 1 mit einer vertikalen Schnittebene senkrecht zur Z-Achsrichtung (beispielhaft ohne Achsschlitten-Baugruppe). **Fig. 7B** zeigt eine beispielhafte Perspektivschnittdarstellung der Werkzeugmaschine 100 aus Fig. 1 mit einer vertikalen Schnittebene senkrecht zur X-Achsrichtung.

Die Arbeitsspindeln 41 und 42 sind jeweils in den Spindelgehäusen 411 und 421 rotatorisch antreibbar gehalten und gelagert, und die Spindelgehäuse 411 und 421 sind jeweils an jeweiligen Spindelträgerschlitten 412 und 422 gehalten.

Die (erste) Arbeitsspindel 41 mit dem Spindelgehäuse 411 kann mittels des Spindelträgerschlittens 412 in S1-Richtung verfahren werden (S1-Achse). Hierzu sind beispielhaft auf der Rückseite des Spindelträgerschlittens 412 erste Spindelträgerführungselemente angeordnet, an denen der Spindelträgerschlitten 412 an in S1-Richtung ausgerichteten Spindelträgerführungen 414 linear verfahrbar gelagert ist. Die Spindelträgerführungen 414 sind beispielhaft in S1-Richtung ausgerichtet und beispielhaft an der Rückseite des Trägerabschnitts 12 des Maschinengestells 1 der Werkzeugmaschine 100 angeordnet (siehe z.B. Fig. 2D).

Zwischen den ersten Spindelträgerführungen 414 der S1-Achse und parallel dazu ist beispielhaft eine erste Spindelträgergewindewelle angeordnet, die über einen Spindelträgerantrieb der S1-Achse angetrieben wird, der beispielhaft an dem Trägerabschnitt 11 des Maschinengestells 1 der Werkzeugmaschine 100 angeordnet ist.

Die S1-Achse umfasst beispielhaft eine an dem ersten Spindelträgerschlitten 412 gehaltene und auf der ersten Spindelträgergewindewelle auf- bzw. angesetzte Gewindemutter, so dass ein lineares Verfahren des ersten Spindelträgerschlittens 412 in Richtung der ersten Spindelträgerführungen 414 in S1-Richtung mittels der Kopplung über die erste Spindelträgergewindewelle durch den ersten Spindelträgerantrieb angetrieben werden kann.

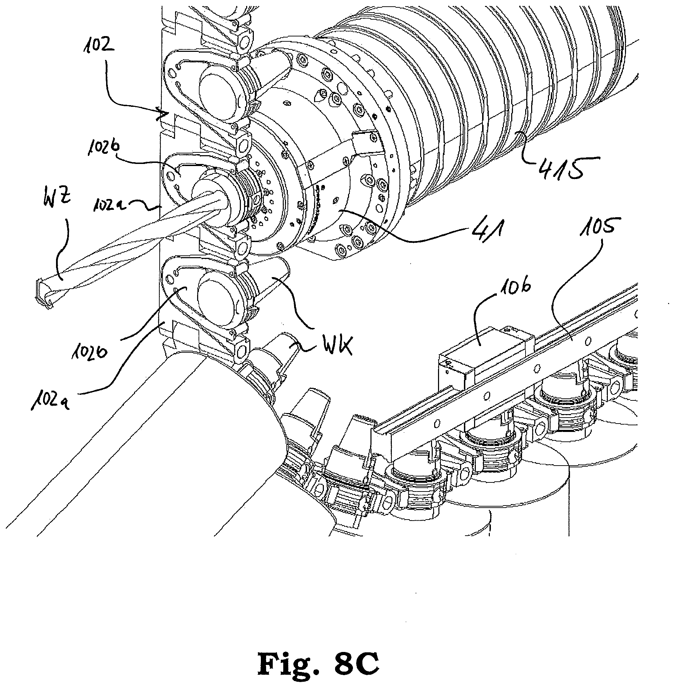

Hierbei ist die erste Arbeitsspindel 41 mittels der S1-Achse in S1-Richtung verfahrbar und kann insbesondere für einen Werkzeugwechsel an der Arbeitsspindel 41 von einer Bearbeitungsposition im Bearbeitungsraum der Werkzeugmaschine 100 zu einer Werkzeugwechselposition am Werkzeugmagazin 10 (siehe z.B. Fig. 8C) verfahren werden. Zudem kann die erste Arbeitsspindel 41 während der Bearbeitung eines Werkstücks mittels der S1-Achse in S1-Richtung relativ zu dem an der Werkstückspanneinrichtung 2 der Achsschlitten-Baugruppe 3 eingespannten Werkstück verfahren werden.

Die (zweite) Arbeitsspindel 42 mit dem Spindelgehäuse 421 kann mittels des Spindelträgerschlittens 422 in S2-Richtung verfahren werden (S2-Achse). Hierzu sind beispielhaft auf der Rückseite des Spindelträgerschlittens 422 zweite Spindelträgerführungselemente angeordnet, an denen der Spindelträgerschlitten 422 an in S2-Richtung ausgerichteten Spindelträgerführungen 424 linear verfahrbar gelagert ist. Die Spindelträgerführungen 424 sind beispielhaft in S2-Richtung ausgerichtet und beispielhaft an der Rückseite des Trägerabschnitts 12 des Maschinengestells 1 der Werkzeugmaschine 100 angeordnet (siehe z.B. Fig. 2D).

Zwischen den zweiten Spindelträgerführungen 424 der S2-Achse und parallel dazu ist beispielhaft eine zweite Spindelträgergewindewelle angeordnet, die über einen Spindelträgerantrieb der S2-Achse angetrieben wird, der beispielhaft an dem Trägerabschnitt 11 des Maschinengestells 1 der Werkzeugmaschine 100 angeordnet ist.

Die S2-Achse umfasst beispielhaft eine an dem zweiten Spindelträgerschlitten 422 gehaltene und auf der zweiten Spindelträgergewindewelle auf- bzw. angesetzte Gewindemutter, so dass ein lineares Verfahren des zweiten Spindelträgerschlittens 422 in Richtung der zweiten Spindelträgerführungen 424 in S2-Richtung mittels der Kopplung über die zweite Spindelträgergewindewelle durch den zweiten Spindelträgerantrieb angetrieben werden kann.

Hierbei ist die zweite Arbeitsspindel 42 mittels der S2-Achse in S2-Richtung verfahrbar und kann insbesondere für einen Werkzeugwechsel an der Arbeitsspindel 42 von einer Bearbeitungsposition im Bearbeitungsraum der Werkzeugmaschine 100 (siehe z.B. Figs. 2A und 7A) zu einer Werkzeugwechselposition am Werkzeugmagazin 10 verfahren werden. Zudem kann die zweite Arbeitsspindel 42 während der Bearbeitung eines Werkstücks mittels der S2-Achse in S2-Richtung relativ zu dem an der Werkstückspanneinrichtung 2 der Achsschlitten-Baugruppe 3 eingespannten Werkstück verfahren werden.

Weiterhin umfasst die Werkzeugmaschine 100 beispielhaft das an dem Trägerabschnitt 13 des Maschinengestells 1 angeordnete Werkzeugmagazin 10. Das Werkzeugmagazin 10 ist beispielhaft an der Außenseite des dritten Trägerabschnitts 13 des Maschinengestells 1 angeordnet und beispielhaft an dem dritten Trägerabschnitt 13 gehalten oder befestigt.

Für den Werkzeugwechsel an der Werkzeugmaschine ist somit beispielhaft weiterhin ein Werkzeugmagazin 10 und eine in dem dritten Trägerabschnitt 13 des Maschinengestells 1 ausgebildete Werkzeugwechselöffnung 131 für einen Werkzeugwechsel an der Arbeitsspindel 41 bzw. eine Werkzeugwechselöffnung 132 für einen Werkzeugwechsel an der Arbeitsspindel 42 vorgesehen.

In den Ausführungsbeispielen sind die S1- und S2-Richtungen der S1- und S2-Achsen zum jeweiligen Verfahren der Arbeitsspindeln 41 und 42 von der im Bearbeitungsraum angeordneten, gemeinsam nutzbaren Bearbeitungsposition zu den jeweiligen Werkzeugwechselpositionen der Arbeitsspindeln 41 und 42 in einer Ebene ausgerichtet, die beispielhaft senkrecht zur Z-Richtung der Z-Achse aufgespannt wird. Zueinander sind die S1- und S2-Richtungen der S1- und S2-Achsen beispielhaft mit einem spitzen Winkel bzw. in einer beispielhaft "liegenden" V-Form (eines um ca. 90 Grad gedrehten V) zueinander ausgerichtet, wobei bevorzugt der Winkel zwischen den S1- und S2-Richtungen als kleiner oder gleich 45 Grad ausgebildet ist.

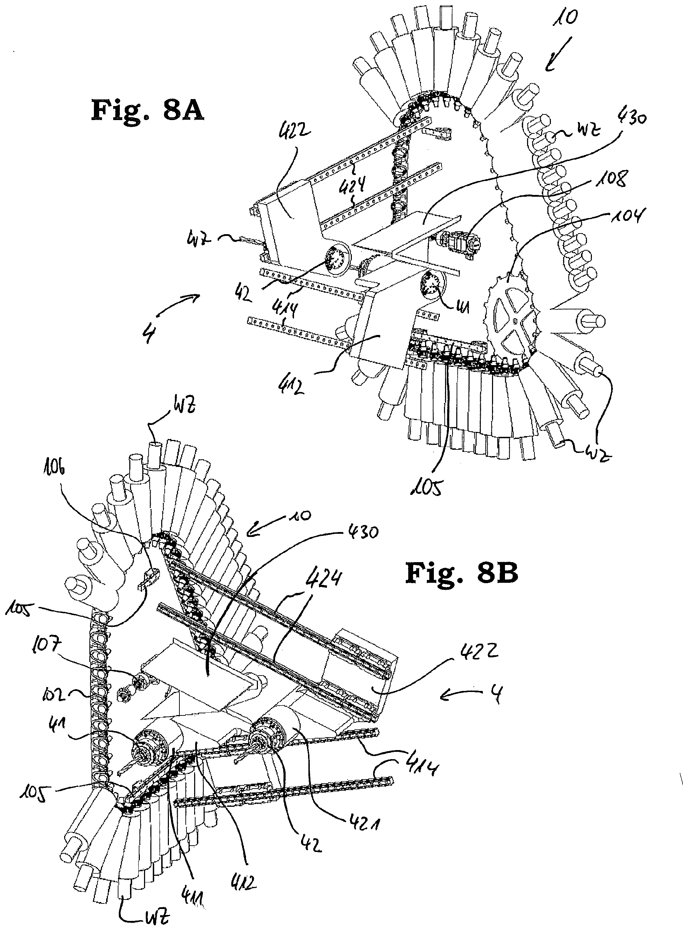

Der hintere Trägerabschnitt 12 weist zur Führung der Spindelbewegung beispielhaft eine V-förmige Spindelführungsöffnung 120 auf, mit einem oberen, in S2-Richtung von der Bearbeitungsposition zu der oberen Werkzeugwechselposition am Werkzeugmagazin 10 verlaufenden Führungsöffnungsabschnitt 122 für die Arbeitsspindel 42 und mit einem unteren, in S1-Richtung von der Bearbeitungsposition zu der unteren Werkzeugwechselposition am Werkzeugmagazin 10 verlaufenden Führungsöffnungsabschnitt 121 für die Arbeitsspindel 41 auf, die beispielhaft durch ein V-förmiges Blech 430 verstärkt sind (siehe V-Blech 430 in Figs. 8A und 8B).

Beispielhaft ist das Werkzeugmagazin 10 als Kettenmagazin ausgebildet und umfasst einen Werkzeugmagazinträger 101 und eine an dem Werkzeugmagazinträger 101 umfänglich angeordnete und verfahrbare, werkzeugtragende Werkzeugmagazinkette 102, wobei der Werkzeugmagazinträger 101 beispielhaft an dem Trägerabschnitt 13 des Maschinengestells 1 angebracht bzw. anbringbar ist. In weiteren Ausführungsbeispielen kann der Werkzeugmagazinträger 101 auch von einem separaten Ständer bzw. Ständergestell gehalten sein, der/das ggf. separat von dem Maschinengestell 1 und unabhängig neben oder hinter der Werkzeugmaschine aufstellbar sein kann.

Das Werkzeugmagazin 10 ist lediglich beispielhaft als Kettenmagazin ausgebildet und umfasst den Werkzeugmagazinträger 101 und die an dem äußeren Umfang des Werkzeugmagazinträgers 101 gehaltene Werkzeugmagazinkette 102, die mittels einem von einem Magazinkettenantrieb angetriebenem Magazinkettenantriebsrad 104 verfahren werden kann. An der Magazinkette 102 können eine Mehrzahl von Werkzeugen WZ bzw. Werkzeugschnittstellen (z.B. Steilkegel-Werkzeugschnittstellen, Hohlschaftkegel-Werkzeugschnittstellen bzw. Morsekegel-Werkzeugschnittstellen) gehalten werden.

Das Werkzeugmagazin 10 ist insbesondere beispielhaft dazu eingerichtet, umfänglich eine Mehrzahl von Werkzeugen bzw. werkzeughaltenden Werkzeugschnittstellen (z.B. Steilkegel-Werkzeugschnittstellen, Hohlschaftkegel-Werkzeugschnittstellen und/oder Morsekegel-Werkzeugschnittstellen) zu halten, zu lagern bzw. vorzuhalten, insbesondere bevorzugt mit radialer bzw. zur Magazinkette 102 senkrechter Ausrichtung der Werkzeugachsen. Hierzu kann das Werkzeugmagazin 10 umfänglich eine Mehrzahl von Werkzeugköchern oder Werkzeughalteelemente zur Aufnahme bzw. zum Halten von Werkzeugen bzw. Werkzeugschnittstellen umfassen, die jeweils bevorzugt an Gliedern der Magazinkette 102 angeordnet sind.

Es sei hervorgehoben, dass die vorliegende Erfindung in keinster Weise auf Werkzeugmaschinen mit integriertem Werkzeugmagazin beschränkt ist, und dass die vorliegende Erfindung zudem in keinster Weise auf eine bestimmte Ausführung eines Werkzeugmagazins, wie z.B. das in Fig. 1 lediglich beispielhaft gezeigte Kettenmagazin, beschränkt ist, und dass vielmehr eine Vielzahl von unterschiedlichen Werkzeugmagazintypen in weiteren Ausführungsbeispielen Anwendung finden können, insbesondere z.B. Regalmagazine, Radmagazine, Mehrfachrad-Werkzeugmagazine oder gar Hybrid-Werkzeugmagazine, die verschiedene Typen von Werkzeugmagazinen in einem Werkzeugmagazin kombinieren.

**Figs. 8A** und **8B** zeigen beispielhafte Perspektivdarstellungen der Spindelbaugruppe 4 und des Werkzeugmagazins 10 der Werkzeugmaschine 100 aus Figs. 1 bis 4C und **Fig. 8C** zeigt eine beispielhafte perspektivische Detaildarstellung der Arbeitsspindel 41 der Werkzeugmaschine 100 an der Werkzeugwechselposition der Arbeitsspindel 41.

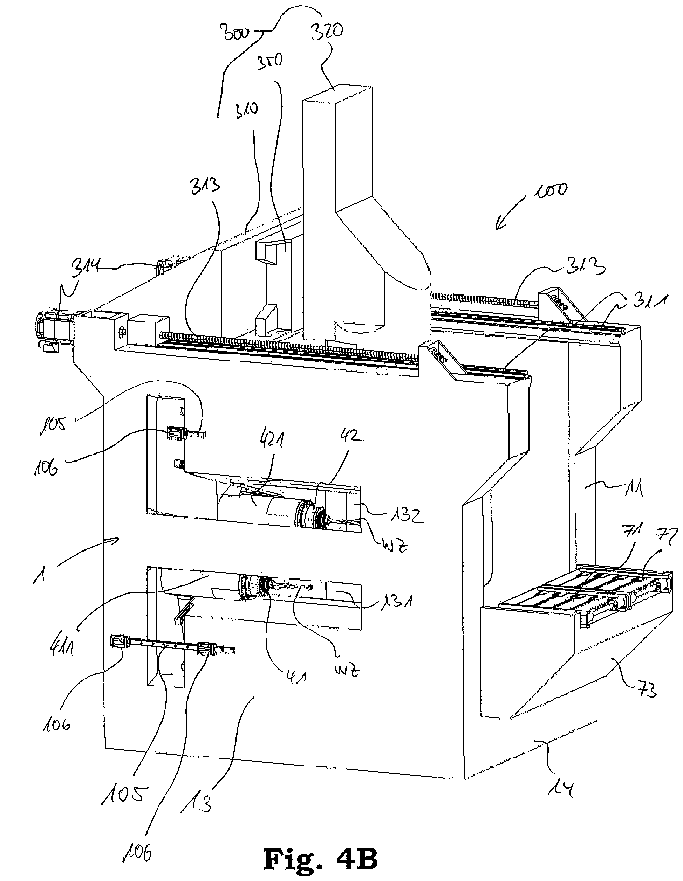

In Figs. 1 bis 4C ist die zweite Arbeitsspindel 42 beispielhaft an einer Arbeitsposition (Bearbeitungsposition) positioniert, die sich beispielhaft mittig in Bezug auf den Bearbeitungsraum zwischen den Trägerabschnitten 11 und 13 des Maschinengestells 1 befindet, siehe z.B. Figs. 1, 2A, 3D, 4A, 4B, 7A und 7B. Beispielhaft ist die erste Arbeitsspindel 41 hierbei benachbart zu einer Werkzeugwechselposition der Arbeitsspindel 41 positioniert, siehe z.B. Figs. 3A, 4A, 4B, und insbesondere die Detaildarstellung gemäß Fig. 8C.

Hierbei zeigt Fig. 8C beispielhaft, dass die Werkzeuge WZ bzw. die Werkzeugschnittstellen WK beispielhaft an Werkzeughaltern WZH bzw. Werkzeughalter-elementen (beispielhaft als zum Einrasten in Greiferrillen von Werkzeugschnittstellen elastisch verformbare Greifelemente 102b ausgebildet) gehalten sind bzw. werden können, die an den Kettengliedern 102a der Werkzeugmagazinkette 102 befestigt bzw. befestigbar sind.

An der Werkzeugwechselposition der ersten Arbeitsspindel 41 weist der Werkzeugmagazinträger 101 beispielhaft einen ersten Wechselabschnitt auf, an dem die Arbeitsspindel 41 mittels der S1-Achse in S1-Richtung an dem Werkzeugmagazinträger 101 hinter ein an einer Wechselposition an dem Wechselabschnitt positioniertes Kettenglied 102a der Werkzeugmagazinkette 102 zur Aufnahme des dort gehaltenen Werkzeugs WZ verfahren kann.

Zum Einsetzen bzw. Herausnehmen des Werkzeugs WZ in die bzw. aus der Arbeitsspindel 41 ist der Werkzeugmagazinträger 101 beispielhaft im Ganzen mittels einer Z2-Achse in Z-Richtung (d.h. insbesondere parallel zur Spindelachse der Arbeitsspindel 41) verfahrbar (siehe z.B. Fig. 2C).

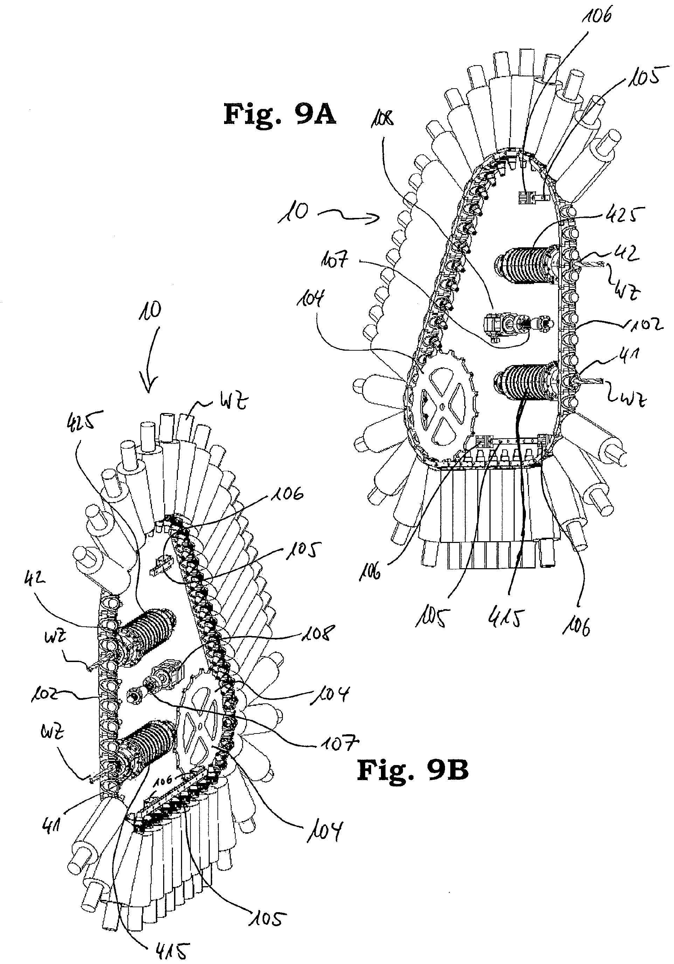

**Figs. 9A** und **9B** zeigen beispielhafte Perspektivdarstellungen des Werkzeugmagazins 10 der Werkzeugmaschine 100 aus Fig. 1.

Die Z2-Achse umfasst in Z-Richtung ausgerichtete Magazinführungen 105 (siehe z.B. Figs. 8A, 8B, 9A und 9B), die an Magazinführungselementen 106 linear verfahrbar gelagert sind, wobei die Magazinführungselemente 106 beispielhaft an dem Trägerabschnitt 13 des Maschinengestells 1 der Werkzeugmaschine 100 angeordnet bzw. anbringbar sind. Zudem ist ein eine horizontal in Z-Richtung ausgerichtete Magazingewindewelle 107 antreibender Magazinträgerantrieb 108 an dem Trägerabschnitt 13 des Maschinengestells 1 der Werkzeugmaschine 100 angeordnet bzw. anbringbar, wobei eine (nicht dargestellte) Gewindemutter an einem Halteabschnitt des Magazinträgers 101 eingreift, derart, dass ein lineares Verfahren des Magazinträgers 101 in Richtung der Magazinführungen 105 in Z-Richtung mittels der Kopplung über die Magazingewindewelle 107 durch den Magazinträgerantrieb 108 angetrieben werden kann.

Analog zur Arbeitsspindel 42, weist der Werkzeugmagazinträger 101 beispielhaft einen zweiten Wechselabschnitt an der Werkzeugwechselposition der zweiten Arbeitsspindel 42 auf, an dem die Arbeitsspindel 42 mittels der S2-Achse in S2-Richtung an dem Werkzeugmagazinträger 101 hinter ein an einer Wechselposition an dem Wechselabschnitt positioniertes Kettenglied der Werkzeugmagazinkette 102 zur Aufnahme des dort gehaltenen Werkzeugs WZ verfahren kann.

Zum Einsetzen bzw. Herausnehmen des Werkzeugs WZ in die bzw. aus der Arbeitsspindel 42 kann der Werkzeugmagazinträger 101 wiederum mittels der vorstehend beschriebenen Z2-Achse in Z-Richtung (d.h. insbesondere parallel zur Spindelachse der Arbeitsspindel 42) verfahren werden.

Dies hat den Vorteil, dass Werkzeuge direkt mittels der Arbeitsspindeln 41 und 42 an dem Werkzeugmagazin 10 ein- und ausgewechselt werden können und insbesondere keine weiteren Werkzeugwechsel-Manipulatoren benötigt werden, so dass die Werkzeugmaschine noch wesentlich kompakter bereitgestellt werden kann.

Analog zu dem Verfahren der vorstehend beschriebenen Linearachsschlitten 310 und 320 der Y-, X- und Z-Achsen sowie das Rotieren der Rundachsen A, B und C der Achsschlitten-Baugruppe 3 kann die Verfahrbewegung der Arbeitsspindeln in S1- bzw. S2-Richtung (S1-Achse bzw. S2-Achse) z.B. über eine numerische Steuereinrichtung (CNC-Steuereinheit und/oder PLC-Steuereinheit, ggf. über ein NC-Programm oder eine manuelle Eingabe an einem Bedienpult der numerischen Steuerung durch einen Bediener) gesteuert werden. Auch das Verfahren der Arbeitsspindeln 41 und 42 in S1- bzw. S2-Richtung kann z.B. über eine numerische Steuereinrichtung (CNC-Steuereinheit und/oder PLC-Steuereinheit, ggf. über ein NC-Programm oder eine manuelle Eingabe an einem Bedienpult der numerischen Steuerung durch einen Bediener) gesteuert werden. Analog gilt dies auch für das Verfahren des Werkzeugmagazinträgers 101 in Z-Richtung und/oder das Verfahren der Werkzeugmagazinkette 102.

Ein großer Vorteil der Werkzeugmaschine 100 gemäß dem Ausführungsbeispiel nach Figs. 1 bis 4C ist nunmehr die Möglichkeit, ein an der Arbeitsspindel 41, die sich an der Werkzeugwechselposition der Werkzeugmaschine 100 befindet, aufgenommenes Werkzeug auszuwechseln, während gleichzeitig das an der Werkzeugspanneinrichtung 2 eingespannte Werkstück WS mittels eines an der Arbeitsspindel 42, die sich an der Bearbeitungsposition der Werkzeugmaschine befindet, aufgenommenen Werkzeugs ohne Leerlaufzeiten bzw. Stillstandzeiten beim Werkzeugwechsel bearbeitet werden kann. Zudem kann die Arbeitsspindel 41 nach Aufnahme eines neu aufgenommenen bzw. eingewechselten Werkzeugs hochlaufen, d.h. auf die Drehzahlen der Spindel bei Werkstückbearbeitung hochbeschleunigen, während die andere Arbeitsspindel 42 parallel dazu noch mit dem darin aufgenommenen Werkzeug das Werkstück WS bearbeitet.

Sobald das an der Werkstückspanneinrichtung 2 eingespannte Werkstück WS mit dem an der Arbeitsspindel 42 aufgenommenen Werkzeug bearbeitet wurde bzw. mit dem an der Arbeitsspindel 41 eingewechselten Werkzeug bearbeitet werden soll, kann die Arbeitsspindel 41 beispielhaft mit dem zu benutzenden Werkzeug durch einfaches und schnelles Verfahren des Spindelträgerschlittens 412 in S2-Richtung von der Werkzeugwechselposition an die Bearbeitungsposition verbracht werden, so dass die Bearbeitung des Werkstücks WS praktisch ohne jegliche Werkzeugwechselzeit weiterbearbeitet werden kann.

Gleichzeitig kann die Arbeitsspindel 42 im gleichen Schritt an die Werkzeugwechselposition verfahren werden, so dass ein Werkzeugwechsel an der Arbeitsspindel 42 möglich ist, ohne dass dafür die Bearbeitung des Werkstücks merklich unterbrochen werden müsste.

Zudem kann die Arbeitsspindel 42 nach erfolgtem Werkzeugwechsel wieder zu den benötigten Bearbeitungsspindeldrehzahlen (z.B. bei 15.000 bis 20.000 min⁻¹) hochgefahren werden, noch während das Werkstück mittels des an der Arbeitsspindel 41 aufgenommen Werkzeugs bearbeitet werden kann. Somit können Stillstandzeiten aufgrund der Werkzeugwechselzeit sowie aufgrund der darauffolgenden Hochfahrzeit vorteilhaft eingespart werden bzw. annähernd vermieden werden.

Sobald dann wiederum das an der Werkstückspanneinrichtung 2 eingespannte Werkstück WS mit dem an der Arbeitsspindel 41 aufgenommenen Werkzeug bearbeitet wurde bzw. mit dem an der Arbeitsspindel 42 eingewechselten Werkzeug bearbeitet werden soll, kann die Arbeitsspindel 42 beispielhaft mit dem zu benutzenden Werkzeug durch einfaches und schnelles Verfahren des Spindelträgerschlittens 422 in S2-Richtung von der Werkzeugwechselposition an die Bearbeitungsposition verbracht werden, so dass die Bearbeitung des Werkstücks WS praktisch ohne jegliche Werkzeugwechselzeit weiterbearbeitet werden kann.

Gleichzeitig kann die Arbeitsspindel 41 im gleichen Schritt wiederum an die Werkzeugwechselposition verfahren werden, so dass ein erneuter Werkzeugwechsel an der Arbeitsspindel 41 möglich ist, ohne dass dafür die Bearbeitung des Werkstücks merklich unterbrochen werden müsste und somit die Bearbeitung des Werkstücks WS erneut praktisch ohne Werkzeugwechselzeit weitergeführt werden kann.

Zudem kann die Arbeitsspindel 41 nach erfolgtem Werkzeugwechsel wieder zu den benötigten Bearbeitungsspindeldrehzahlen (z.B. bei 15.000 bis 20.000 min⁻¹) hochgefahren werden, noch während das Werkstück mittels des an der Arbeitsspindel 42 aufgenommen Werkzeugs bearbeitet werden kann. Somit können Stillstandzeiten aufgrund der Werkzeugwechselzeit sowie aufgrund der darauffolgenden Hochfahrzeit vorteilhaft eingespart werden bzw. annähernd vermieden werden.

Dies ergibt eine hervorragend effiziente Bearbeitungszeit für die Bearbeitung des Werkstücks WS, selbst wenn viele Arbeitsschritte mit einer hohen Zahl an Werkzeugwechseln ggf. in kurzer Aufeinanderfolge erforderlich sein sollten, und das praktisch ohne jegliche Stillstandzeiten der Werkzeugmaschine, wie sie gewöhnlich bei Werkzeugwechseln an Werkzeugmaschinen auftreten (einschließlich der Hochfahrzeit der Spindeln auf Bearbeitungsdrehzahlen), und zudem bei hervorragend vorteilhaft ermöglichter kompakter Bauweise der Werkzeugmaschine.

Beispielhaft kann die Werkzeugmaschine gemäß dem Ausführungsbeispiel der Figs. 1 bis 4C weiterhin einen Schutzkappenmechanismus bzw. eine Schutzklappenvorrichtung aufweisen, der/die ggf. automatisch öffen- und schließbar ist. Insbesondere umfasst die Schutzklappenvorrichtung beispielhaft zwei Schutzklappenabschnitte für die jeweiligen Werkzeugwechselöffnungen 131 und 132 im Trägerabschnitt 13 des Maschinengestells 1 der Werkzeugmaschine 100, die bevorzugt unabhängig voneinander öffenbar bzw. schließbar sind.

Im geöffneten Zustand ermöglicht der Schutzkappenmechanismus dann beispielhaft das Verfahren der Arbeitsspindeln zwischen der Bearbeitungs- und der Werkzeugwechselposition, und im geschlossenen Zustand verdeckt der geschlossene Schutzkappenmechanismus dann beispielhaft die jeweilige an der Werkzeugwechselposition positionierte Arbeitsspindel vorteilhaft aus dem Bearbeitungsraum der Werkzeugmaschine gesehen.

Insbesondere ermöglicht es eine halbgeöffnete Schutzklappenvorrichtung mit heruntergezogenem bzw. geöffnetem (unteren) Schutzklappenabschnitt das Verfahren der unteren Arbeitsspindel 41 zwischen der Werkzeugwechselposition am Werkzeugmagazin 10 und dem Bearbeitungsraum der Werkzeugmaschine 100 und mit heraufgezogenem bzw. geöffnetem (oberen) Schutzklappenabschnitt das Verfahren der oberen Arbeitsspindel 42 zwischen der Werkzeugwechselposition am Werkzeugmagazin 10 und dem Bearbeitungsraum der Werkzeugmaschine 100.

Bevorzugt trennt der Schutzkappenmechanismus hierbei im geschlossenen Zustand beispielhaft die jeweilige an der Werkzeugwechselposition am Werkzeugmagazin 10 positionierte Arbeitsspindel vorteilhaft vollständig vom Bearbeitungsraum der Werkzeugmaschine 100.

Bevorzugt ist der Schutzkappenmechanismus an bzw. in der in dem Trägerabschnitt 13 des Maschinengestells 1 ausgebildeten Werkzeugwechselöffnungen 131 und 132 angeordnet oder angebracht, bevorzugt derart, dass der Schutzkappenmechanismus im geschlossenen Zustand die in dem Trägerabschnitt 13 des Maschinengestells 1 ausgebildeten Werkzeugwechselöffnungen 131 und/oder 132 zum Bearbeitungsraum hin verschließt, wobei die an der Werkzeugwechselposition positionierte Arbeitsspindel bevorzugt auf der dem Bearbeitungsraum abgewandten Seite des geschlossenen Schutzkappenmechanismus bzw. eines Schutzklappenabschnitts des geschlossenen Schutzkappenmechanismus angeordnet ist, und die an der Bearbeitungsposition bzw. Arbeitsposition positionierte Arbeitsspindel auf der dem Bearbeitungsraum zugewandten Seite des geschlossenen Schutzkappenmechanismus bzw. eines Schutzklappenabschnitts des geschlossenen Schutzkappenmechanismus angeordnet ist.

Die ersten und zweiten Schutzklappenabschnitte sind bevorzugt dazu eingerichtet, die Schutzklappenvorrichtung zu schließen, indem diese an der Werkzeugwechselöffnung 132 bzw. 131 jeweils nach oben bzw. nach unten verfahren werden oder alternativ zum Bearbeitungsraum hin geklappt werden können.

In den vorstehend beschriebenen Ausführungsbeispielen der vorliegenden Erfindung ist die Werkzeugmaschine 100 als Doppel-Spindel-Fräsmaschine mit zwei Arbeitsspindeln 41 und 42 ausgeführt. Jedoch ist die vorliegende Erfindung in keinster Weise auf ein derartiges Doppel-Spindelsystem eingeschränkt, sondern es können in weiteren Ausführungen beispielhaft mehr als zwei Spindeln bevorzugt übereinander bereitgestellt werden.

Ein weiterer Vorteil kann auf einfach Weise bereitgestellt werden, wenn die Spindeln 41 und 42 mit in den Spindelgehäusen 411 und 421 von hinten eingeführten Spindelkartuschen ausgebildet sind, die zu Wartungsarbeiten oder zur Modifikation bzw. Aufrüstung mit anderen Spindelkartuschen austauschbar sind.

Zusammenfassend wird ein Werkzeugmaschinenkonzept vorgeschlagen, welches es vorteilhaft ermöglicht, auf vorteilhafte, ungewöhnliche und neuartige Weise, eine präzise arbeitende, kostengünstige, äußerst kompakte und effiziente Werkzeugmaschine mit optimal minimierten Standzeiten zu schaffen, insbesondere da jeweils zumindest eine (oder mehrere) der Spindeln an einer jeweiligen Arbeitsposition ein Werkstück bearbeiten kann während zumindest an einer anderen Spindel (oder an mehreren anderen Spindeln) an einer jeweiligen Werkzeugwechselposition ein Werkzeugwechsel durchgeführt werden kann, ohne die Bearbeitung des bzw. der Werkstücke für den Werkzeugwechsel zu unterbrechen.

**Bezugszeichenliste**

| | | | |
|---|---|---|---|
| 100 | Werkzeugmaschine | 415 | erster Spindelantrieb |
| 1 | Maschinengestell | 42 | zweite Arbeitsspindel |
| 11 | erster Trägerabschnitt | 421 | zweites Spindelgehäuse |
| 12 | zweiter Trägerabschnitt | 422 | Spindelträgerschlitten (S2-Achse) |
| 120 | Spindelführungsöffnung (V-förmig) | 424 | Spindelträgerführungen (S2-Achse) |
| 121 | erster Führungsöffnungsabschnitt | 425 | zweiter Spindelantrieb |
| 122 | zweiter Führungsöffnungsabschnitt | 430 | V-Blech |
| 123 | Späneabführöffnung | 6 | Späneauffangwanne |
| 13 | dritter Trägerabschnitt | 7 | Fördereinrichtung |
| 131 | erste Werkzeugwechselöffnung | 71 | Eingabeförderabschnitt |
| 132 | zweite Werkzeugwechselöffnung | 72 | Ausgabeförderabschnitt |
| 14 | vierter Trägerabschnitt | 73 | Fördereinrichtungsträgerabschnitt |
| 141 | Werkstückwechselöffnung | 10 | Werkzeugmagazin |
| 2 | Werkstückspanneinrichtung | 101 | Werkzeugmagazinträger |
| 3 (300) | Achsschlitten-Baugruppe | 102 | Werkzeugmagazinkette |
| 310 | Achsschlitten (Z-Achse) | 102a | Werkzeugmagazinkettenglied |
| 311 | Achsführungen (Z-Achse) | 102b | Werkzeughalteelement |
| 312 | Achsführungselemente (Z-Achse) | 104 | Magazinkettenantriebsrad |
| 313 | Gewindewelle (Z-Achse) | 105 | Magazinführungen (Z2-Achse) |
| 314 | Achsantrieb (Z-Achse) | 106 | Magazinführungselemente (Z2-Achse) |
| 315 | Gewindemutter (Z-Achse) | 107 | Magazingewindewelle (Z2-Achse) |
| 350 | Achsschlitten (X-Achse) | 108 | Magazinträgerantrieb (Z2-Achse) |
| 320 | Achsschlitten (Y-Achse) | | |
| 323 | Gewindewelle (Y-Achse) | WZH | Werkzeughalter |
| 324 | Achsantrieb (Y-Achse) | WZ | Werkzeug |
| 360 | Schwenkkopf (A-Achse) | WS | Werkstück |
| A | Rotationsachse der A-Achse | WK | Werkzeugschnittstelle |
| 330 | Schwenkkopf (B-Achse) | | |
| B | Rotationsachse der B-Achse | | |
| 340 | Drehelement (C-Achse) | | |
| C | Rotationsachse der C-Achse | | |
| 4 | Spindelbaugruppe | | |
| 41 | erste Arbeitsspindel | | |
| 411 | erstes Spindelgehäuse | | |
| 412 | Spindelträgerschlitten (S1-Achse) | | |
| 414 | Spindelträgerführungen (S1-Achse) | | |

## Patentansprüche

1. Werkzeugmaschine mit:
- einem einen Bearbeitungsraum ausbildenden Maschinengestell (1);
- einer Werkstückspanneinrichtung (2) zum Einspannen eines Werkstücks (WS);
- einer an dem Maschinengestell angeordneten Achsschlitten-Baugruppe (3; 300), die dazu eingerichtet ist, das an der Werkstückspanneinrichtung (2) eingespannte Werkstück (WS) mittels zumindest zwei steuerbarer Linearachsen (Y, Z; Y, X, Z) linear zu verfahren; und
- einer an dem Maschinengestell (1) angeordneten Spindelträger-Baugruppe (4) mit zumindest zwei werkzeugtragenden Arbeitsspindeln (41, 42);
wobei eine erste Arbeitsspindel (41) der zumindest zwei werkzeugtragenden Arbeitsspindeln (41, 42) mittels einer dritten steuerbaren Linearachse (S1) zwischen einer Bearbeitungsposition im Bearbeitungsraum und einer ersten Werkzeugwechselposition der ersten Arbeitsspindel (41) linear verfahrbar ist, wobei eine zweite Arbeitsspindel (42) der zumindest zwei werkzeugtragenden Arbeitsspindeln (41, 42) mittels einer vierten steuerbaren Linearachse (S2) zwischen der Bearbeitungsposition im Bearbeitungsraum und einer zweiten Werkzeugwechselposition der zweiten Arbeitsspindel (42) linear verfahrbar ist, **dadurch gekennzeichnet, dass** die Richtungen der dritten und vierten Linearachsen (S1, S2) schräg oder senkrecht zueinander ausgerichtet sind, und die erste Werkzeugwechselposition im Wesentlichen über der zweiten Werkzeugwechselposition angeordnet ist.

2. Werkzeugmaschine gemäß Anspruch 1, **dadurch gekennzeichnet, dass**
die Richtungen der dritten und vierten Linearachsen (S1, S2) schräg mit einem Winkel kleiner oder gleich 90 Grad zueinander, insbesondere kleiner oder gleich 45 Grad zueinander, ausgerichtet sind.

3. Werkzeugmaschine gemäß Anspruch 1 oder 2, **gekennzeichnet durch**
ein Werkzeugmagazin (10), das einen an dem Maschinengestell (1) angeordneten Werkzeugmagazinträger (101) aufweist, der dazu eingerichtet ist, eine Mehrzahl von Werkzeugen (WZ) vorzuhalten, und der mittels einer fünften Linearachse (Y2) senkrecht zu den Richtungen der dritten und vierten Linearachsen (S1, S2) und insbesondere parallel zu den Spindelachsen der zwei werkzeugtragenden Arbeitsspindeln (41, 42) verfahrbar ist.

4. Werkzeugmaschine gemäß Anspruch 3, **dadurch gekennzeichnet, dass**
die Werkzeugwechselpositionen der zwei werkzeugtragenden Arbeitsspindeln (41, 42) in einer ersten Stellung des Werkzeugmagazinträgers (101) an jeweiligen Wechselabschnitten des Werkzeugmagazins (10) angeordnet sind, und
die zwei werkzeugtragenden Arbeitsspindeln (41, 42) in der ersten Stellung des Werkzeugmagazinträgers (101) durch jeweiliges Verfahren zu der jeweiligen Werkzeugwechselposition dazu eingerichtet sind, für einen Werkzeugwechsel Werkzeuge an einen Werkzeughalter des Werkzeugmagazins (10) an dem jeweiligen Wechselabschnitt des Werkzeugmagazins (10) direkt einzusetzen.

5. Werkzeugmaschine gemäß Anspruch 4, **dadurch gekennzeichnet, dass**
der Werkzeugmagazinträger (101) dazu eingerichtet ist, zur Entnahme eines an einer der Werkzeugspindeln (41, 42) aufgenommenen Werkzeugs (WZ) an der jeweiligen Werkzeugwechselposition mittels der fünften Linearachse (Y2) aus der ersten Stellung in eine zweite Stellung zu verfahren; und/oder
der Werkzeugmagazinträger (101) dazu eingerichtet ist, zum Einsetzen eines Werkzeugs (WZ) an einer der Werkzeugspindeln (41, 42) an der jeweiligen Werkzeugwechselposition mittels der fünften Linearachse (Y2) aus der zweiten Stellung in die erste Stellung zu verfahren.

6. Werkzeugmaschine gemäß einem der Ansprüche 3 bis 5, **dadurch gekennzeichnet, dass**
das Werkzeugmagazin (10) weiterhin eine Werkzeugmagazinkette (102) aufweist, die umfänglich verfahrbar an dem Werkzeugmagazinträger (101) angeordnet ist.

7. Werkzeugmaschine gemäß einem der vorstehenden Ansprüche, **dadurch gekennzeichnet, dass**
eine jeweilige an der Bearbeitungsposition positionierte Arbeitsspindel (41; 42) mittels eines aufgenommenen Werkzeugs dazu eingerichtet ist, das an der Werkstückspanneinrichtung (2) eingespannte Werkstück (WS) zu bearbeiten, während die jeweils andere Arbeitsspindel (42; 41) für einen Werkzeugwechsel an der jeweiligen Werkzeugwechselposition positioniert ist; und/oder
eine jeweilige an der entsprechenden Werkzeugwechselposition positionierte Arbeitsspindel (41; 42) nach einem erfolgten Werkzeugwechsel dazu eingerichtet ist, auf Bearbeitungsspindeldrehzahlen hochzufahren, während die jeweils andere Arbeitsspindel (42; 41) mittels eines aufgenommenen Werkzeugs das an der Werkstückspanneinrichtung (2) eingespannte Werkstück (WS) bearbeitet.

8. Werkzeugmaschine gemäß einem der vorstehenden Ansprüche, **gekennzeichnet durch**
eine automatisch öffen- und schließbare Schutzklappenvorrichtung, die in geschlossenem Zustand einen die Werkstückspanneinrichtung (2) aufweisenden Bearbeitungsraum der Werkzeugmaschine von den Werkzeugwechselpositionen der Werkzeugmaschine (100) abtrennt und in geöffnetem Zustand ein Verfahren der Arbeitsspindeln (41, 42) zwischen dem Bearbeitungsraum und den jeweiligen Werkzeugwechselpositionen ermöglicht.

9. Werkzeugmaschine gemäß einem der vorstehenden Ansprüche, **dadurch gekennzeichnet, dass**
die erste Arbeitsspindel (41) und die zweite Arbeitsspindel jeweils dazu eingerichtet sind, Werkzeugschnittstellen gleicher Größe aufzunehmen, oder
die erste Arbeitsspindel (41) dazu eingerichtet ist, Werkzeugschnittstellen einer ersten Größe aufzunehmen und die zweite Arbeitsspindel (42) dazu eingerichtet ist, Werkzeugschnittstellen einer von der ersten Größe verschiedenen zweiten Größe aufzunehmen.

10. Werkzeugmaschine gemäß einem der vorstehenden Ansprüche, **dadurch gekennzeichnet, dass**
die erste Arbeitsspindel (41) und die zweite Arbeitsspindel jeweils dazu eingerichtet sind, Werkzeugschnittstellen eines gleichen Werkzeugschnittstellentyps, insbesondere des Hohlschaftkegeltyps, des Morsekegeltyps oder des Steilkegeltyps, aufzunehmen, oder
die erste Arbeitsspindel (41) dazu eingerichtet ist, Werkzeugschnittstellen eines ersten Werkzeugschnittstellentyps, insbesondere des Hohlschaftkegeltyps, des Morsekegeltyps oder des Steilkegeltyps, aufzunehmen und die zweite Arbeitsspindel (42) dazu eingerichtet ist, Werkzeugschnittstellen eines vom ersten Werkzeugschnittstellentyp verschiedenen zweiten Werkzeugschnittstellentyps aufzunehmen.

11. Werkzeugmaschine gemäß einem der vorstehenden Ansprüche, **dadurch gekennzeichnet, dass**
das Maschinengestell (1) einen Bearbeitungsraum ausbildet und die Achsschlitten-Baugruppe (3) über dem Bearbeitungsraum auf dem Maschinengestell (1) angeordnet ist,
wobei die Werkstückspanneinrichtung (2) an der Achsschlitten-Baugruppe (3) gehalten wird und dazu eingerichtet ist, das Werkstück (WS) bzw. eine das Werkstück (WS) haltende Werkstückpalette hängend oder seitlich hängend einzuspannen, insbesondere zur Überkopfbearbeitung des an der Werkstückspanneinrichtung (2) hängend eingespannten Werkstücks (WS).

12. Werkzeugmaschine gemäß Anspruch 11, **gekennzeichnet durch**
eine Fördereinrichtung (7) zum Fördern von Werkstücken (WS), insbesondere mit nach oben oder seitlich ausgerichteter Werkstückpalette, zu einer Einspannposition zur Aufnahme durch die Werkstückspanneinrichtung (2) von oben zum hängenden oder seitlich hängenden Einspannen eines der Werkstücke an der Werkstückspanneinrichtung (2), und zum Fördern eines der Werkstücke, insbesondere mit nach oben oder seitlich ausgerichteter Werkstückpalette, aus einer Ausspannposition nach Lösen des Werkstücks aus der hängenden oder seitlich hängenden Einspannung durch die Werkstückspanneinrichtung (2).

13. Werkzeugmaschine gemäß einem der vorstehenden Ansprüche, **dadurch gekennzeichnet, dass**
die Achsschlitten-Baugruppe (3; 300) weiterhin dazu eingerichtet ist, das an der Werkstückspanneinrichtung (2) eingespannte Werkstück (WS) mittels einer steuerbaren Rundachse (A; B; C) rotatorisch zu verfahren;
die Achsschlitten-Baugruppe (3; 300) weiterhin dazu eingerichtet ist, das an der Werkstückspanneinrichtung (2) eingespannte Werkstück (WS) mittels zwei steuerbaren Rundachsen (A, B; B, C) um jeweilige Rotationsachsen, die schräg oder senkrecht zueinander ausgerichtet sind, rotatorisch zu verfahren; oder
die Achsschlitten-Baugruppe (300) weiterhin dazu eingerichtet ist, das an der Werkstückspanneinrichtung (2) eingespannte Werkstück (WS) mittels drei steuerbaren Rundachsen (A, B, C) um jeweilige Rotationsachsen, von denen zumindest eine Rotationsachse schräg oder senkrecht zu zumindest einer anderen Rotationsachse ausgerichtet ist, rotatorisch zu verfahren.

14. Werkzeugmaschine gemäß einem der vorstehenden Ansprüche, **dadurch gekennzeichnet, dass**
die Achsschlitten-Baugruppe (300) dazu eingerichtet ist, das an der Werkstückspanneinrichtung (2) eingespannte Werkstück (WS) mittels zumindest drei steuerbarer Linearachsen (Y, X, Z) linear zu verfahren.

15. Werkzeugmaschine gemäß einem der vorstehenden Ansprüche, **dadurch gekennzeichnet, dass**
die jeweilige an der Bearbeitungsposition positionierte Arbeitsspindel (41; 42) mittels eines aufgenommenen Werkzeugs (WZ) dazu eingerichtet ist, das an der Werkstückspanneinrichtung (2) eingespannte Werkstück (WS) zu bearbeiten.

## Claims

1. A machine tool, comprising:
- a machine frame (1) forming a machining area;
- a workpiece clamping device (2) for clamping a workpiece (WS);
- an axis slide assembly(3; 300) arranged on said machine frame and configured to linearly move said workpiece (WS) clamped on said workpiece clamping device (2) by means of at least two controllable linear axes (Y, Z; Y, X, Z); and
- a spindle carrier assembly (4) arranged on said machine frame (1) and having at least two tool-carrying work spindles (41, 42);
wherein a first work spindle (41) of said at least two tool-carrying work spindles (41, 42) is moveable linearly by way of a third controllable linear axis (S1) between a machining position in said machining area and a first tool change position of the first work spindle (41),
wherein a second work spindle (42) of said at least two tool-carrying work spindles (41, 42) is moveable linearly by means of a fourth controllable linear axis (S2) between the machining position in said machining area and a second tool change position of said second work spindle (42),
**characterized in that**
the directions of the third and fourth linear axes (S1, S2) are oriented obliquely or perpendicularly to one another, and the first tool change position is substantially arranged above the second tool change position

2. The machine tool according to claim 1, **characterized in that**
the directions of the third and fourth linear axes (S1, S2) are obliquely to one another at an angle of less than or equal to 90 degrees, in particular less than or equal to 45 degrees.

3. The machine tool according to claim 1 or 2, **characterized by**
a tool magazine (10) having a tool magazine carrier (101) which is arranged on said machine frame (1), is configured to have a plurality of tools (WZ) available, and is moveable perpendicularly to the directions of the third and fourth linear axes (S1, S2) and in particular in parallel to the spindle axes of said two tool-carrying work spindles (41, 42) by means of a fifth linear axis (Y2).

4. The machine tool according to claim 3, **characterized in that**
the tool change positions of said two tool-carrying work spindles (41, 42) are arranged on respective change portions of said tool magazine (10) in a first position of said tool magazine carrier (101), and
in the first position of said tool magazine carrier (101), said two tool-carrying work spindles (41, 42) are configured, by a respective movement to the respective tool change position, to directly insert, for a tool change, tools into a tool holder of said tool magazine (10) at the respective change portion of said tool magazine (10).

5. The machine tool according to claim 4, **characterized in that**
said tool magazine carrier (101) is configured to move from the first position into a second position by means of said fifth linear axis (Y2) in order to remove a tool (WZ) received at one of the tool spindles (41, 42) at the respective tool change position; and/or
said tool magazine carrier (101) is configured to move from the second position into the first position by means of said fifth linear axis (Y2) in order to insert a tool (WZ) on one of said tool spindles (41, 42) at the respective tool change position.

6. The machine tool according to one of claims 3 to 5, **characterized in that**
said tool magazine (10) further comprises a tool magazine chain (102) arranged on said tool magazine carrier (101) in such a way that said tool magazine chain (102) is moveable circumferentially.

7. The machine tool according to one of the preceding claims, **characterized in that**
a respective work spindle (41, 42) positioned at the machining position is configured by means of a received tool to machine said workpiece (WS) clamped on said workpiece clamping device (2) while the respective other work spindle (42, 41) is positioned at the respective tool change position for a tool change; and/ or
after the tool change, a respective work spindle (41, 42) positioned at the corresponding tool change position is configured to accelerate to machining spindle speeds while the respective other work spindle (42, 41) machines said workpiece (WS) clamped on said workpiece clamping device (2) by means of a received tool.

8. The machine tool according to one of the preceding claims, **characterized by**
an automatically openable and closable protective cover device which, in the closed state, separates a machining area of the machine tool including said workpiece clamping device (2) from the tool change positions of said machine tool (100) and, in the open state, allows for a movement of said work spindles (41, 42) between said machining area and the respective tool change positions.

9. The machine tool according to one of the preceding claims, **characterized in that**
said first work spindle (41) and said second work spindle are both configured to receive tool interfaces of equal size, or
said first work spindle (41) is configured to receive tool interfaces of a first size and said second work spindle (42) is configured to receive tool interfaces of a second size different from said first size.

10. The machine tool according to one of the preceding claims, **characterized in that**
said first work spindle (41) and said second work spindle are each configured to receive tool interfaces of the same tool interface type, in particular of the hollow shank taper type, the Morse taper type, or the steep taper type, or
said first work spindle (41) is configured to receive tool interfaces of a first tool interface type, in particular, the hollow shank cone type, the Morse taper type, or the steep taper type, and said second work spindle (42) is configured to receive tool interfaces of a second tool interface type different from the first tool interface type.

11. The machine tool according to one of the preceding claims, **characterized in that**
said machine frame (1) forms a machining space and said axis slide assembly (3) is arranged above said machining space on said machine frame (1),
wherein said workpiece clamping device (2) is held on said axis slide assembly (3) and is configured to clamp said workpiece (WS) or a workpiece pallet holding said workpiece (WS) in suspended or laterally suspended fashion, in particular for overhead machining of said workpiece (WS) on said workpiece clamping device (2) in suspended fashion.

12. The machine tool according to claim 11, **characterized by**
a conveying device (7) for conveying workpieces (WS), in particular with an upwardly or laterally oriented workpiece pallet, to a clamping position in order to be received by said workpiece clamping device (2) from above for the suspended or laterally suspended clamping of one of the workpieces on said workpiece clamping device (2), and for conveying one of the workpieces, in particular with an upwardly or laterally oriented workpiece pallet, from an unclamping position after releasing the workpiece from the suspended or laterally suspended clamping by said workpiece clamping device (2).

13. The machine tool according to one of the preceding claims, **characterized in that**:
said axis slide assembly (3; 300) is further configured to rotatorily move said workpiece (WS) clamped on said workpiece clamping device (2) by means of a controllable rotary axis (A; B; C);
said axis slide assembly (3; 300) is further configured to rotatorily move said workpiece (WS) clamped on said workpiece clamping device (2) by means of two controllable rotary axes (A, B; B, C) about respective axes of rotation oriented obliquely or perpendicularly to one another; or
said axis slide assembly (300) is further configured to rotatorily move said workpiece (WS) clamped on said workpiece clamping device (2) by means of three controllable rotary axes (A, B, C) about respective axes of rotation, of which at least one axis of rotation is oriented obliquely or perpendicularly to at least one other axis of rotation.

14. The machine tool according to one of the preceding claims, **characterized in that**
said axis slide assembly (300) is configured to linearly move said workpiece (WS) clamped on said workpiece clamping device (2) by means of at least three controllable linear axes (Y, X, Z).

15. The machine tool according to one of the preceding claims, **characterized in that**
said respective work spindle (41; 42) positioned at the machining position is configured to machine said workpiece (WS) clamped on said workpiece clamping device (2) by means of a received tool (WZ).

## Revendications

1. Machine-outil avec :
un bâti de machine (1) formant un espace de façonnage ;
un dispositif de serrage de pièce à usiner (2) pour serrer une pièce à usiner (WS) ;
un assemblage de chariot d'axe (3 ; 300) agencé contre le bâti de machine et arrangé pour déplacer de façon linéaire la pièce à usiner (WS) serrée contre le dispositif de serrage de pièce à usiner (2) au moyen d'au moins deux axes linéaires (Y, Z ; Y, X, Z) commandables ; et
un assemblage de porte-broche (4) agencé contre le bâti de machine (1) avec au moins deux broches de travail (41, 42) portant un outil ;
dans laquelle une première broche de travail (41) des au moins deux broches de travail (41, 42) portant un outil peut être déplacée au moyen d'un troisième axe linéaire (S1) commandable entre une position de façonnage dans l'espace de façonnage et une première position de changement d'outil de la première broche de travail (41),
dans laquelle
une deuxième broche de travail (42) des au moins deux broches de travail (41, 42) portant un outil peut être déplacée au moyen d'un quatrième axe linéaire (S2) commandable entre la position de façonnage dans l'espace de façonnage et une seconde position de changement d'outil de la deuxième broche de travail (42),
**caractérisée en ce que**
les directions des troisième et quatrième axes linéaires (S1, S2) sont orientées à l'oblique ou perpendiculairement l'une par rapport à l'autre, et la première position de changement d'outil est essentiellement agencée par-dessus la seconde position de changement d'outil.

2. Machine-outil selon la revendication 1, **caractérisée en ce que** les directions des troisième et quatrième axes linéaires (S1, S2) sont orientées à l'oblique selon un angle inférieur ou égal à 90 degrés l'une par rapport à l'autre, en particulier inférieur ou égal à 45 degrés l'une par rapport à l'autre.

3. Machine-outil selon la revendication 1 ou 2, **caractérisée par**
un magasin à outils (10) qui présente un support de magasin à outils (101) agencé contre le bâti de machine (1) et arrangé pour tenir à disposition une pluralité d'outils (WZ), et qui peut être déplacé au moyen d'un cinquième axe linéaire (Y2) perpendiculairement aux directions des troisième et quatrième axes linéaires (S1, S2) et en particulier parallèlement aux axes de broche des deux broches de travail (41, 42) portant un outil.

4. Machine-outil selon la revendication 3, **caractérisée en ce que**
les positions de changement d'outil des deux broches de travail (41, 42) portant un outil sont agencées dans un premier positionnement du support de magasin à outils (101) contre des sections de changement respectives du magasin à outils (10), et
les deux broches de travail (41, 42) portant un outil dans le premier positionnement du support de magasin à outils (101) par un déplacement respectif jusque dans la position de changement d'outil sont arrangées pour, en vue d'un changement d'outil, directement utiliser des outils contre un porte-outil du magasin à outils (10) contre la section de changement respective du magasin à outils (10).

5. Machine-outil selon la revendication 4, **caractérisée en ce que**
le support de magasin à outils (101) est arrangé pour, afin de prélever un outil (WZ) reçu contre l'une des broches de travail (41, 42), déplacer contre la position de changement d'outil respective au moyen du cinquième axe linéaire (Y2) depuis le premier positionnement jusque dans un second positionnement ; et/ou
le support de magasin à outils (101) est arrangé pour, afin d'introduire un outil (WZ) contre l'une des broches de travail (41, 42), déplacer contre la position de changement d'outil respective au moyen du cinquième axe linéaire (Y2) depuis le second positionnement vers le premier positionnement.

6. Machine-outil selon l'une des revendications 3 à 5, **caractérisée en ce que**
le magasin à outils (10) présente en outre une chaîne de magasins à outils (102) qui est agencée contre le support de magasin à outils (101) de sorte à pouvoir être déplacée de façon circonférentielle.

7. Machine-outil selon l'une des revendications précédentes, **caractérisée en ce que**
une broche de travail (41 ; 42) respective positionnée contre la position de façonnage est arrangée au moyen d'un outil reçu pour façonner la pièce à usiner (WS) serrée contre le dispositif de serrage de pièce à usiner (2), pendant que l'autre broche de travail (42 ; 41) respective est positionnée contre la position de changement d'outil respective pour un changement d'outil ; et/ou
une broche de travail (41 ; 42) respective positionnée contre la position de changement d'outil correspondante est arrangée à l'issue d'un changement d'outil pour monter en vitesse de rotation de broche de façonnage, pendant que l'autre broche de travail (42 ; 41) respective façonne la pièce à usiner (WS) serrée au moyen d'un outil reçu contre le dispositif de serrage de pièce à usiner (2).

8. Machine-outil selon l'une des revendications précédentes, **caractérisée par**
un dispositif de clapet de protection pouvant être automatiquement ouvert et fermé qui à l'état fermé sépare un espace de façonnage, présentant le dispositif de serrage de pièce à usiner (2), de la machine-outil des positions de changement d'outil de la machine-outil (100), et à l'état ouvert permet un déplacement des broches de travail (41, 42) entre l'espace de façonnage et les positions de changement d'outil respectives.

9. Machine-outil selon l'une des revendications précédentes, **caractérisée en ce que**
la première broche de travail (41) et la seconde broche de travail sont respectivement arrangées pour recevoir des interfaces d'outil de même taille, ou
la première broche de travail (41) est arrangée pour recevoir des interfaces d'outil d'une première taille et la seconde broche de travail (42) est arrangée pour recevoir des interfaces d'outil d'une seconde taille différente de la première taille.

10. Machine-outil selon l'une des revendications précédentes, **caractérisée en ce que**
la première broche de travail (41) et la seconde broche de travail sont respectivement arrangées pour recevoir des interfaces d'outil d'un même type d'interface d'outil, en particulier du type cône de tige creuse, du type cône morse ou du type cône fort, ou
la première broche de travail (41) est arrangée pour recevoir des interfaces d'outil d'un premier type d'interface d'outil, en particulier du type cône de tige creuse, du type cône morse ou du type cône fort, et la seconde broche de travail (42) est arrangée pour recevoir des interfaces d'outil d'un second type d'interface d'outil différent du premier type d'interface d'outil.

11. Machine-outil selon l'une des revendications précédentes, **caractérisée en ce que**
le bâti de machine (1) forme un espace de façonnage et l'assemblage de chariot d'axe (3) est agencé par-dessus l'espace de façonnage sur le bâti de machine (1),
dans laquelle le dispositif de serrage de pièce à usiner (2) est maintenu contre l'assemblage de chariot d'axe (3) et est arrangé pour serrer la pièce à usiner (WS) ou une palette de pièce à usiner maintenant la pièce à usiner (WS) suspendue ou latéralement suspendue, en particulier pour un façonnage tête en bas de la pièce à usiner (WS) serrée suspendue contre le dispositif de serrage de pièce à usiner (2).

12. Machine-outil selon la revendication 11, **caractérisée par**
un dispositif d'acheminement (7) pour acheminer des pièces à usiner (WS), en particulier avec une palette de pièce à usiner orientée vers le haut ou latéralement, jusqu'à une position d'enserrement pour la réception par le dispositif de serrage de pièce à usiner (2) depuis le haut pour l'enserrement suspendu ou latéralement suspendu d'une des pièces à usiner contre le dispositif de serrage de pièce à usiner (2), et pour acheminer l'une des pièces à usiner, en particulier avec une palette de pièce à usiner orientée vers le haut ou latéralement, depuis une position de détente après libération de la pièce à usiner de l'enserrement suspendu ou latéralement suspendu par le dispositif de serrage de pièce à usiner (2).

13. Machine-outil selon l'une des revendications précédentes, **caractérisée en ce que**
l'assemblage de chariot d'axe (3 ; 300) est en outre arrangé pour déplacer en rotation la pièce à usiner (WS) serrée contre le dispositif de serrage de pièce à usiner (2) au moyen d'un axe cylindrique (A ; B ; C) commandable ;
l'assemblage de chariot d'axe (3 ; 300) est en outre arrangé pour déplacer en rotation la pièce à usiner (WS) serrée contre le dispositif de serrage de pièce à usiner (2) au moyen de deux axes cylindriques (A, B ; B, C) commandables autour d'axes de rotation respectifs qui sont arrangés à l'oblique ou perpendiculairement l'une par rapport à l'autre ; ou
l'assemblage de chariot d'axe (300) est en outre arrangé pour déplacer en rotation la pièce à usiner (WS) serrée contre le dispositif de serrage de pièce à usiner (2) au moyen de trois axes cylindriques (A, B, C) commandables autour d'axes de rotation respectifs dont au moins un axe de rotation est arrangé à l'oblique ou perpendiculairement par rapport à au moins un autre axe de rotation.

14. Machine-outil selon l'une des revendications précédentes, **caractérisée en ce que**
l'assemblage de chariot d'axe (300) est arrangé pour déplacer de façon linéaire la pièce à usiner (WS) serrée contre le dispositif de serrage de pièce à usiner (2) au moyen d'au moins trois axes linéaires (Y, X, Z) commandables.

15. Machine-outil selon l'une des revendications précédentes, **caractérisée en ce que**
la broche de travail (41 ; 42) respective positionnée contre la position de façonnage est arrangée au moyen d'une pièce à usiner (WS) reçue pour façonner la pièce à usiner (WS) serrée contre le dispositif de serrage de pièce à usiner (2).
